# EUROPEAN PATENT APPLICATION

(11) **EP 4 814 721 A1**
(43) Date of publication of application: **30.09.2026**
(21) Application number: 26165869.4
(22) Date of filing: 18.03.2026
(51) Int. Cl.: G06F 11/07

(54) **GENERATING ENHANCED ANOMALOUS SIGNAL GROUPS IN A CLOUD COMPUTING SYSTEM USING GROUPING LOGIC MODELS**

(30) Priority: 26.03.2025 US 202519091593
(71) Applicant: Microsoft Technology Licensing, LLC, Redmond, WA 98052 (US)
(72) Inventor: TITON, Myriam, Redmond, 98052 (US); ALBURQUERQUE, Michael, Redmond, 98052 (US); SAMAMA, Jeremy, Redmond, 98052 (US); LAVI, Yaniv, Redmond, 98052 (US); LEIBOVITCH, Inbal, Redmond, 98052 (US); NAUERMAN, Efrat, Redmond, 98052 (US); NESHER, Adi, Redmond, 98052 (US); HADDAD, Guy, Redmond, 98052 (US)
(74) Representative: CMS Cameron McKenna Nabarro Olswang LLP

(57) **Abstract**

This disclosure describes utilizing an anomaly-based mitigation system to accurately, flexibly, and efficiently determine groupings of anomalous signals from across a computing system by identifying and combining different logical groups of anomalous signals. For example, the anomaly-based mitigation system utilizes different grouping logic models, which identify various connection strategies to determine initial groupings of anomalous signals. The anomaly-based mitigation system then determines commonalities between the initial anomalous signal groups using graph models to identify connected groups of anomalous signals. Furthermore, the anomaly-based mitigation system refines the groups to enhance their effectiveness in identifying and resolving service incidents in the computing system. In some instances, the anomaly-based mitigation system presents the anomalous signal groups in an incident report interface that includes actions to take or actions that were automatically taken to resolve a service incident.

## Description

### BACKGROUND

In recent years, significant progress has been made in both hardware and software within computing devices, with a particularly notable focus on advancements in cloud computing systems. These systems offer a wide spectrum of services and applications to users. However, occasional service incidents and outages can disrupt network systems and user experiences. Understanding the reasons behind these incidents and resolving the root causes has become a priority for system administrators. Regrettably, current systems offer suboptimal approaches for handling incidents and corresponding metric anomalies. To elaborate, many existing systems rely on rigid methodologies that tend to become obsolete and struggle to accommodate various combinations of metric anomalies associated with service incidents. Additionally, some systems employ machine learning models to provide information about service incidents and metric anomalies, but these models often yield inaccurate solutions. Consequently, existing systems encounter challenges of inefficiency, inaccuracy, and inflexibility when attempting to identify, analyze, troubleshoot, or even resolve service incidents within cloud computing systems.

### BRIEF DESCRIPTION OF THE DRAWINGS

The following description provides specific and detailed implementations accompanied by drawings. Additionally, each of the figures listed below corresponds to one or more implementations discussed in this disclosure.
FIG. 1 illustrates an example overview for implementing an anomaly-based mitigation system to generate connected groups of anomalous signals from anomalous signals detected from across a cloud computing system.
FIG. 2 illustrates an example computing environment where an anomaly-based mitigation system is implemented in a cloud computing system.
FIG. 3 illustrates an example block diagram for generating an incident report user interface using various data flows to process anomalous signals.
FIG. 4 illustrates an example block diagram for obtaining anomalous signals from across a cloud computing system.
FIGS. 5A-5B illustrate example diagrams of a generalized grouping logic model for generating a data graph from anomalous signals.
FIGS. 6A-6C illustrate example diagrams of various grouping logic models for generating data graphs from anomalous signals.
FIGS. 7A-7B illustrate example diagrams of generating an aggregated data graph from multiple data graphs.
FIG. 8 illustrates an example block diagram for refining connected anomalous signal groups identified from the aggregated data graph.
FIG. 9 illustrates an example graphical user interface for displaying an incident report on a client device.
FIG. 10 illustrates an example series of acts of a computer-implemented method for generating anomaly groupings for incidents in a computing system using one or more generative artificial intelligence (AI) models.
FIG. 11 illustrates example components included within a computer system.

### DETAILED DESCRIPTION

This disclosure describes utilizing an anomaly-based mitigation system to accurately, flexibly, and efficiently determine groupings of anomalous signals from across a computing system by identifying and combining different logical groups of anomalous signals. For example, the anomaly-based mitigation system utilizes different grouping logic models, which identify various connection strategies to determine initial groupings of anomalous signals. The anomaly-based mitigation system then determines commonalities between the initial anomalous signal groups using graph models to identify connected groups of anomalous signals. Furthermore, the anomaly-based mitigation system refines the groups to enhance their effectiveness in identifying and resolving service incidents in the computing system. In some instances, the anomaly-based mitigation system presents the anomalous signal groups in an incident report interface that includes actions to take or actions that were automatically taken to resolve a service incident.

For context, a cloud computing system provides several services and applications to users. Periodically, a service incident occurs that impacts systems, services, applications, users, and/or devices. In this disclosure, the term "service incident" (or "incident") refers to an unplanned or unforeseen interruption to a cloud service or application within a cloud computing system (or another computing system that receives a high volume of anomalous signals). Often, an incident is determined by metric and signal monitoring devices or components that log or track data signals of a service or application, which include anomalous signals. In this disclosure, the terms "anomalous signals" and "anomalous metrics" are used interchangeably and refer to signals that deviate from anticipated or expected values, trajectories, or ranges.

In many current systems, when anomalous signals are detected, they are often presented together with little to no relationship between them. However, presenting multiple anomalies together is confusing and does not allow for efficient anomaly investigation. Indeed, these types of presentations or summaries are too dense to be usable by either automated systems of a cloud computing system or service teams. Furthermore, without any structure or organization among anomalous signals, current systems are unable to determine accurate root causes, even using generative AI models. Indeed, the generative AI models are overloaded with too much information, which results in no root cause analyses or inaccurate ones.

As a result of these shortcomings in current systems, some systems require expert engineers to manually determine anomaly grouping. This, too, causes several problems. For example, due to the volume of anomalous signals, many important signals are dismissed as noise, resulting in inaccurate groups. Additionally, the lack of expertise among the engineers causes false positive groups to be formed. Furthermore, by the time engineers are able to create anomalous signal groups, the underlying problems have often escalated, causing further issues and generating more anomalous signals.

Implementations of the anomaly-based mitigation system overcome these and other shortcomings by using grouping logic models, graph mapping algorithms, graph aggregation algorithms, and generative artificial intelligence (AI) models to determine connected groups of anomalous signals. For example, the anomaly-based mitigation system uses a multistep framework that leverages the diversity of different grouping logic models to determine sets of initial anomalous signal groups with varying connection strengths. The anomaly-based mitigation system combines these anomalous signal groups to generate an aggregated set of anomalous signal groups. Based on the groups of connected anomalous signals, the anomaly-based mitigation system can address and sometimes automatically resolve service incidents within the cloud computing system. By generating the groups of connected anomalous signals, the anomaly-based mitigation system improves the efficiency, accuracy, and flexibility of the cloud computing system.

To illustrate, in various implementations, the anomaly-based mitigation system obtains a set of detected anomalous signals on a cloud computing system (or another computing system that receives a high volume of anomalous signals). Using multiple different grouping logic models, the anomaly-based mitigation system generates multiple data graphs that each include groups of related anomalous signals from the detected anomalous signals. From the multiple data graphs, the anomaly-based mitigation system generates an aggregated data graph. In some instances, the anomaly-based mitigation system also determines a cloud incident root cause for one or more groups of connected anomalous signals using a generative AI model based on their anomalous signals. Additionally, the anomaly-based mitigation system provides the multiple groups of connected anomalous signals within an incident report interface that may include a corrective action and, in some instances, executes the corrective action on the cloud computing system to resolve a service incident related to a group of anomalous signals.

As described throughout this disclosure, including the following paragraphs, the anomaly-based mitigation system delivers several significant technical benefits in terms of computing accuracy, flexibility, and efficiency compared to existing systems. Moreover, the anomaly-based mitigation system provides several practical applications that address problems related to correlating anomalous signals with service incidents, including identifying the root causes of incidents and reporting incident information and corresponding mitigation actions clearly and concisely.

To illustrate, the anomaly-based mitigation system implements a multi-layer framework that groups anomalous signals into meaningful clusters of connected anomalous signals, allowing the cloud computing system to more efficiently, accurately, and flexibly address, often automatically, service incidents. For example, by generating multiple different groups of anomalous signals using different grouping logic models, the anomaly-based mitigation system can generate more accurate connected anomalous signal groupings, leading to improved efficiency of the cloud computing system through improved response to service incidents, including automatic mitigation responses. To elaborate, by providing the same set of detected anomalous signals to different grouping logic models, the different grouping logic models can identify different connection types between the anomalous signals. Indeed, the different grouping logic models can identify different and diverse connections among anomalous signals and form different initial anomalous signal groups from the same set of anomalous signals.

Additionally, the anomaly-based mitigation system can combine each of the initial anomalous signal groups together to generate an aggregate set of connected anomalous signal groups. This aggregate grouping of anomalous signals combines strongly correlated and often missed groups from the initial groupings into a comprehensive aggregate set of connected anomalous signals. Because the groups of connected anomalous signals provide a much more accurate representation of service incidents within the cloud computing system, the anomaly-based mitigation system can use these groups to more accurately and efficiently identify service incident root causes and solutions to resolve the service incidents.

Along these lines, the anomaly-based mitigation system provides improved insights regarding service incidents in incident reports. For instance, an incident report presents one or more critical groups of connected anomalous signals along with concise, summarized information about an incident and/or the anomalous signals in a group. Furthermore, upon generating the groups of connected anomalous signals, the anomaly-based mitigation system can rank the groups according to incident severity. Then, the anomaly-based mitigation system presents the most severe or important groups first to ensure that critical services can be quickly addressed and fixed. By prioritizing key incidents and concisely providing effective information, the anomaly-based mitigation system allows security issues to be accurately identified and quickly resolved.

In various implementations, the anomaly-based mitigation system provides efficient and accurate results by delivering clear and concise outputs that are legible and understandable to users. As mentioned, contemporary incident reports produced without the anomaly-based mitigation system provide several rows of separate graphs of metric anomalies, which do not offer a comprehensive summary of the metric anomalies. Furthermore, contemporary incident reports fail to identify any root causes nor do they provide mitigation actions. In contrast, the anomaly-based mitigation system provides incident reports with concise text narrative responses that can include a summary text response, a root cause text response, and corrective actions. Moreover, the anomaly-based mitigation system flexibly adapts to accurately handle combinations of anomalous metrics not previously cataloged, including combinations of different types corresponding to different resources.

As noted above, because the anomaly-based mitigation system generates comprehensive groups of connected anomalous signals, the root causes of service incidents can be more quickly diagnosed and addressed. In various implementations, the anomaly-based mitigation system can automatically implement various fixes to resolve service incidents. For instance, upon accurately diagnosing an issue and/or pinpointing a device or component that is the root cause of an incident, the anomaly-based mitigation system can automatically apply corrective actions (e.g., restart a virtual machine (VM), reroute data, access a backup resource store, shut down locked processes, or allocate additional resources). Indeed, in various instances, the anomaly-based mitigation system reports an incident, the group of connected anomalous signals resulting from the incident, a corrective action solution to the incident, and a confirmation of the cloud computing system automatically addressing and/or resolving the incident. In some instances, the anomaly-based mitigation system reports on the incident and connects anomalous signals to allow a service team to resolve the incident.

As illustrated in the foregoing discussion, this disclosure utilizes various terms to describe the features and advantages of one or more implementations. To illustrate, this disclosure describes an anomaly-based mitigation system in the context of a cloud computing system, although the context of another computing system that performs anomalous signal investigations equally applies. As an example, the term "cloud computing system" refers to a network of interconnected computing devices that provide various services and applications to computing devices (e.g., server devices and client devices) inside or outside of the cloud computing system. Additional terms are defined throughout the document in different examples and contexts.

As an example, the term "generative artificial intelligence model" (or "generative AI model") refers to a computational system that utilizes deep learning and a large number of parameters (e.g., billions or trillions for a large version and fewer for a small version) and is trained on one or more extensive datasets to produce coherent, contextually relevant, and fluent outputs (e.g., text and/or images) specific to a particular topic. In many cases, a generative AI model is an advanced computational system that uses natural language processing, machine learning, and/or image processing to generate human-like responses that are coherent and contextually relevant. For instance, generative AI models can create outputs in various formats, including one-word answers, long narratives, images, videos, labeled datasets, documents, tables, and presentations.

Moreover, generative AI models are primarily based on transformer architectures for understanding, generating, and manipulating human language. Generative AI models can also utilize other types of architectures such as recurrent neural network (RNN) architecture, long short-term memory (LSTM) model architecture, convolutional neural network (CNN) architecture, or other types of architectures. Examples of generative AI models include generative pre-trained transformer (GPT) models like GPT-3.5, GPT-4, and GPT-4o, bidirectional encoder representations from transformers (BERT) models, text-to-text transfer transformer models like T5, conditional transformer language (CTRL) models, and Turing-NLG. Other types of generative AI models include sequence-to-sequence models (Seq2Seq), vanilla RNNs, and LSTM networks. In some instances, a generative AI model includes a large language model (LLM), a small language model (SLM), a large action model (LAM), and a small action model (SAM), which serve as text-based versions of a generative AI model, such as those that receive text prompts and/or generate text outputs. In various implementations, a generative AI model is a multimodal generative model that receives multiple input formats (e.g., text, images, video, data structures) and/or generates multiple output formats.

This disclosure includes "grouping logic models," which refer to models or algorithms that use one or more approaches to determine signal groupings from a set of signals or metrics generated by or with respect to a cloud computing system. Grouping logic models can generate anomalous signal groupings from different viewpoints, including, but not limited to, semantic similarity, reoccurring historical patterns, prior knowledge, transactional patterns, temporal patterns, causality, relationships, logic, flow, considerations, and domain knowledge, among other viewpoints. Additionally, anomalous signal groups generated by grouping logic models can be transformed into data graphs of nodes and edges that show connections between correlated anomalous signals. In some implementations, the data graph is a sparse data graph.

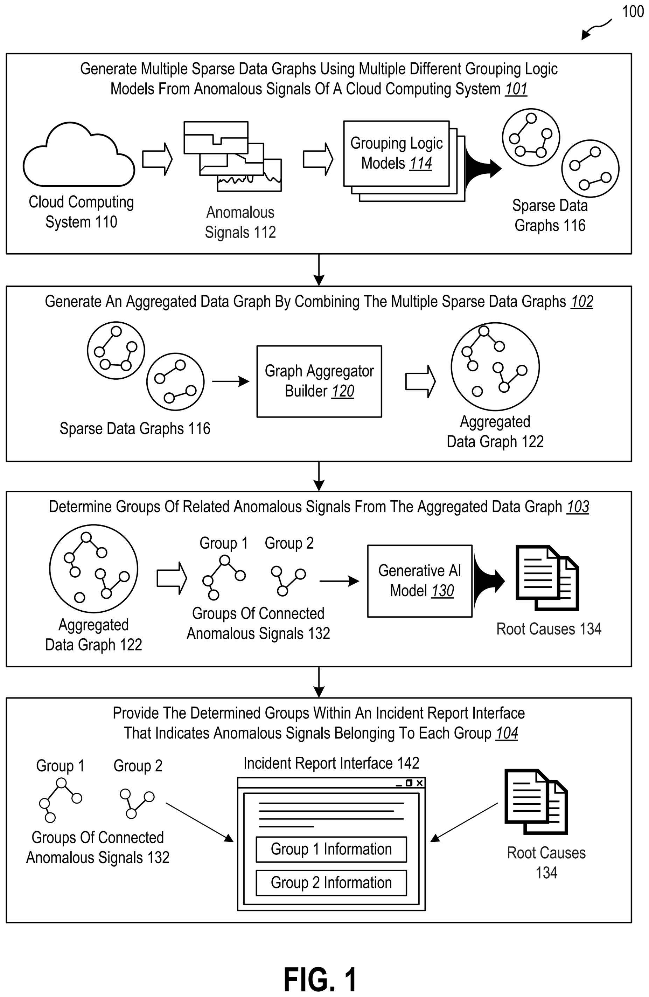

Additional example implementations and details of the anomaly-based mitigation system are discussed in connection with the accompanying figures, which are described next. For example, FIG. 1 illustrates an overview for implementing an anomaly-based mitigation system to generate connected groups of anomalous signals from anomalous signals detected across a cloud computing system according to some implementations. As shown, FIG. 1 illustrates a series of acts 100 performed by or in connection with the anomaly-based mitigation system within a cloud computing system.

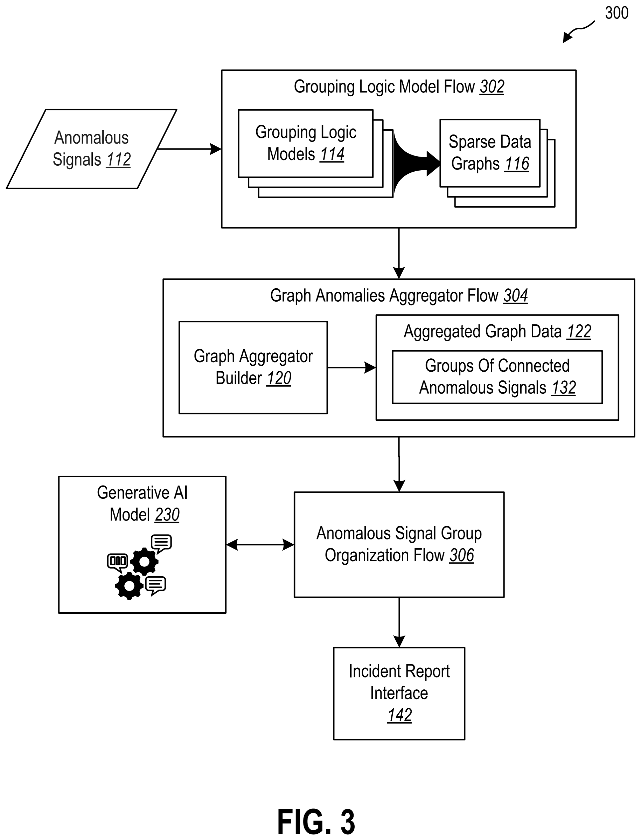

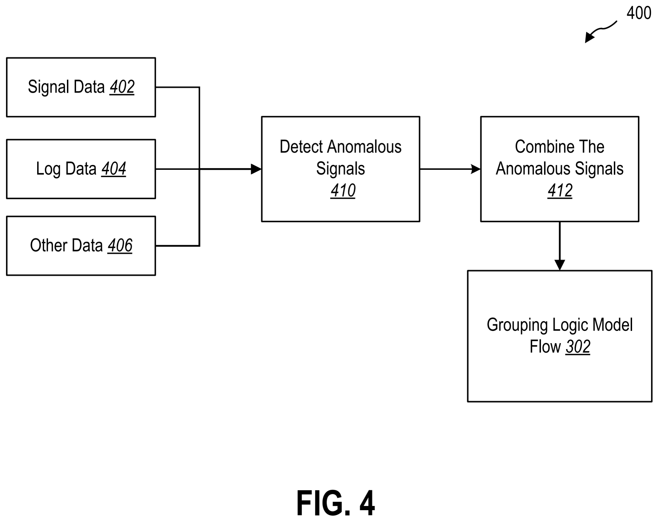

The series of acts 100 includes act 101 of generating multiple data graphs using multiple different grouping logic models from anomalous signals of a cloud computing system. In various implementations, the cloud computing system 110 (or another conventional system) executes various processes and/or performs various services. As metrics and logs are gathered, anomalous signals 112 are detected and provided to the anomaly-based mitigation system. The anomaly-based mitigation system provides the anomalous signals 112 to grouping logic models 114, which generate data graphs 116. Additional details regarding gathering anomalous signals are provided in connection with FIG. 4 below. Additional details regarding utilizing grouping logic models and generating data graphs from anomalous signals are provided below in connection with FIGS. 3, 5A-5B, and 6A-6C.

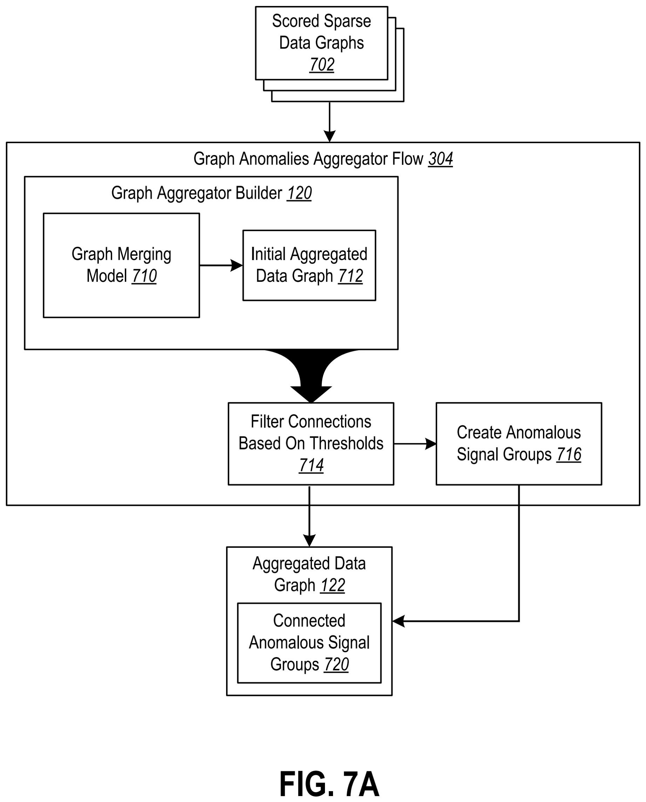

The series of acts 100 includes act 102 of generating an aggregated data graph by combining multiple data graphs. As mentioned above, the anomaly-based mitigation system may generate the data graphs 116 from the initial anomalous signal group generated by the grouping logic models 114. Additionally, in various implementations, the anomaly-based mitigation system utilizes a graph aggregator builder 120 to create the aggregated data graph 122 from the multiple versions of the data graphs 116. Additional details regarding aggregating the data graphs into an aggregated data graph are provided below in connection with FIGS. 7A-7B.

Act 103 includes determining groups of related anomalous signals from the aggregated data graph. For instance, the anomaly-based mitigation system distills the aggregated data graph to enrich the connections between correlated anomalous signals, which can include removing weaker connections. Then, the anomaly-based mitigation system identifies groups of connected anomalous signals 132 from the aggregated data graph 122 based on clusters of connected anomalous signal groups. In one or more implementations, the anomaly-based mitigation system also ranks the groups based on one or more group attributes and/or characteristics.

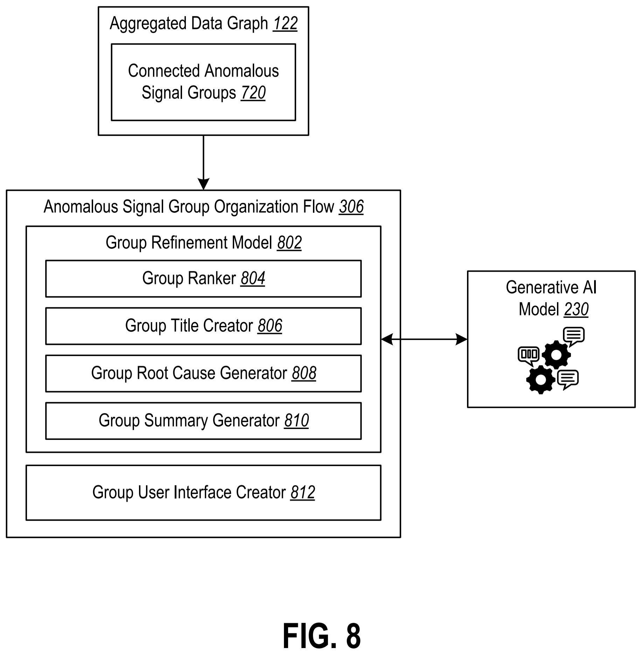

Furthermore, in various implementations, the anomaly-based mitigation system utilizes a generative AI model 130 to enrich each of the groups of connected anomalous signals 132. For example, the anomaly-based mitigation system uses the generative AI model 130 to create group labels, determine root causes 134 of the connected anomalous signals in groups, and/or provide group summaries and insights. Additional details regarding selecting and enhancing data of connected groups of anomalous signals are provided in connection with FIG. 8.

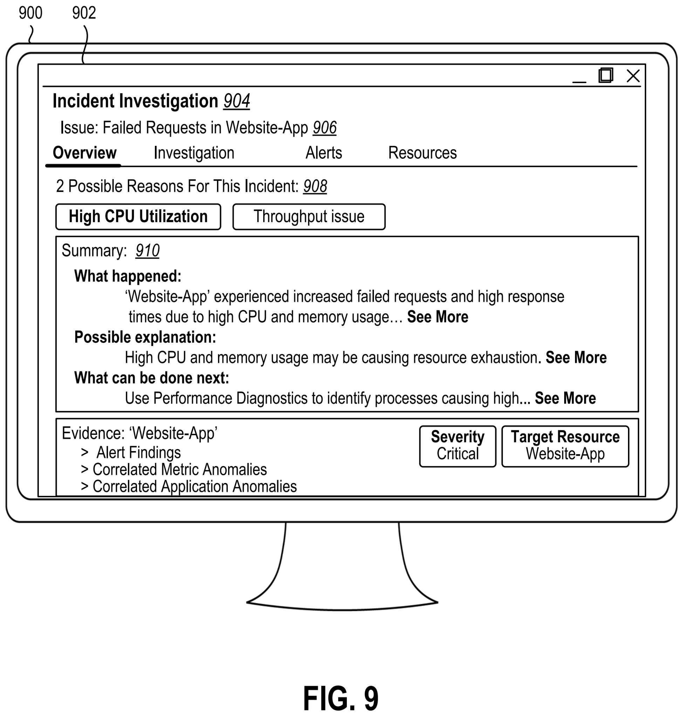

Act 104 includes providing the determined groups within an incident report interface that indicates anomalous signals belonging to each group. For example, the anomaly-based mitigation system provides an incident report interface 142 that includes one or more of the groups determined from the aggregated data graph 122 along with associated group information. In some implementations, the incident report interface 142 includes root causes 134, corrective actions, and/or whether any corrective actions have automatically been taken to resolve the service incident associated with a group of anomalous signals. An example incident report interface is provided in FIG. 9.

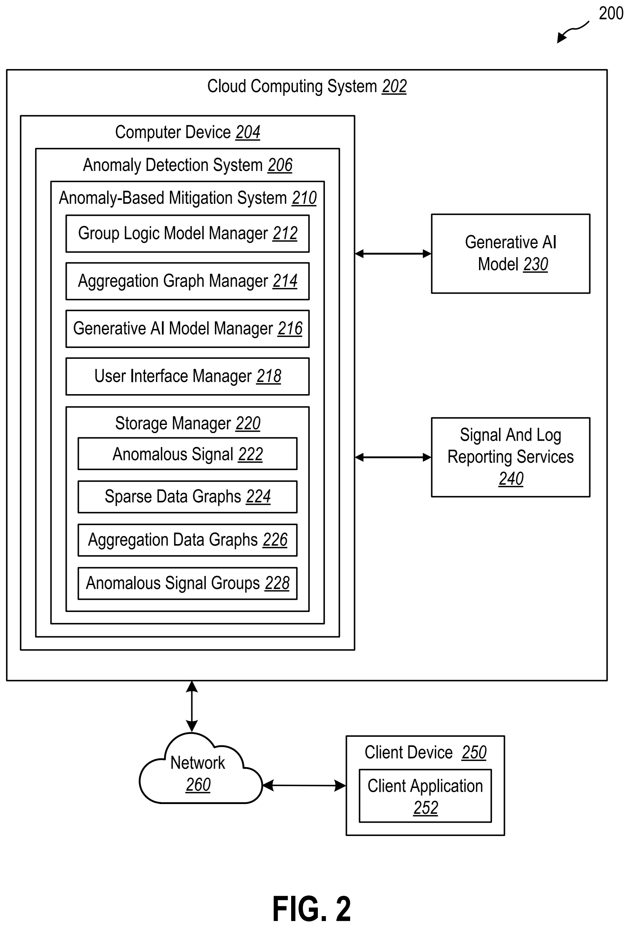

With a general overview in place, additional details are provided regarding the components, features, and elements of the anomaly-based mitigation system. To illustrate, FIG. 2 shows an example computing environment where the anomaly-based mitigation system is implemented. In particular, FIG. 2 illustrates an example of a computing environment 200 with various computing devices associated with an anomaly-based mitigation system 210. While FIG. 2 shows example arrangements and configurations of the anomaly-based mitigation system and associated components, other arrangements and configurations are possible.

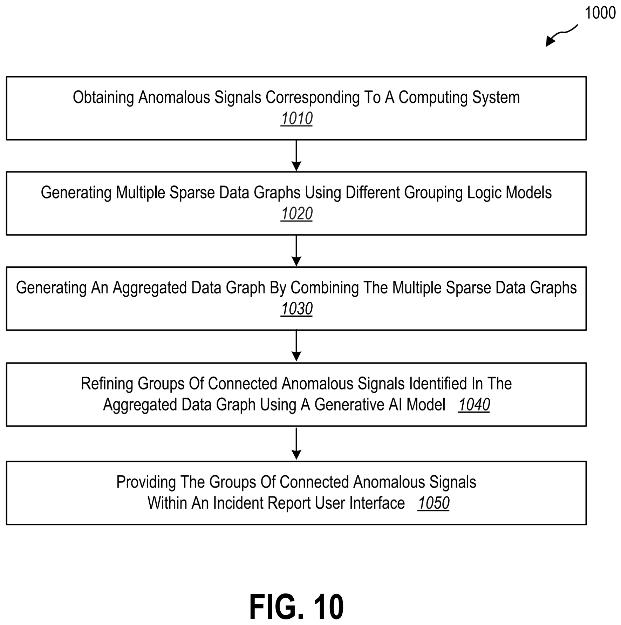

As shown, the computing environment 200 includes a cloud computing system 202 and a client device 250 connected via a network 260. The cloud computing system 202 includes a computing device 204, a generative AI model 230, and signal and log reporting services 240. These and other components of the cloud computing system 202, which are not shown for simplicity, may be implemented on one or more computing devices, such as a set of server devices. For example, the computing device 204, which implements the anomaly-based mitigation system 210, may also be one or more server devices. Further details regarding these and other computing devices are provided below in connection with FIG. 10, along with additional details regarding networks, such as the network 260 shown.

The computing device 204 implements an anomaly detection system 206 that includes the anomaly-based mitigation system 210. In some instances, the anomaly detection system 206 identifies anomalies (e.g., anomalous signals and anomalous metrics) from services and metric monitors within the cloud computing system 202. For example, the anomaly detection system 206 communicates with the signal and log reporting services 240 to receive metrics and determine metric anomalies that occur. The anomaly detection system 206 may provide sets of anomalous signals to the anomaly-based mitigation system 210 as part of determining connected anomalous signal groups and generating incident reports.

In various implementations, the anomaly-based mitigation system 210 generally provides interfaces, tools, services, and frameworks for users to report information regarding metric anomalies and service incidents.

As mentioned earlier, the anomaly-based mitigation system 210 generates incident reports that indicate groups of connected anomalous signals correlating to a service incident, along with group information, which can include potential root causes and corresponding remedies (e.g., corrective actions). As shown, the anomaly-based mitigation system 210 includes various components and elements, which are implemented in hardware and/or software. For example, the anomaly-based mitigation system 210 includes a grouping logic model manager 212, an aggregation graph manager 214, a generative AI model manager 216, a user interface manager 218, and a storage manager 220. The storage manager 220 includes anomalous signals 222, data graphs 224, aggregation data graphs 226, and anomalous signal groups 228.

In various implementations, the grouping logic model manager 212 generates data graphs 224 from the anomalous signals 222. As mentioned, the grouping logic model manager 212 can manage several grouping logic models that have different viewpoints, strengths, focuses, group targets, and/or styles. The aggregation graph manager 214 can generate aggregation data graphs 226 from the data graphs 224 (e.g., sparse data graphs). From the aggregation data graphs 226, the aggregation graph manager 214 can determine anomalous signal groups 228. Operations and approaches of the concepts described below are detailed further in connection with subsequent figures.

In various implementations, the generative AI model manager 216 communicates with the generative AI model 230 to generate group information. For example, the generative AI model manager 216 provides model prompts to the generative AI model 230 along with anomalous signals corresponding to an anomalous signal group and/or incident to generate group information. Group information can include group labels, root causes, summaries, and insights.

In some implementations, the user interface manager 218 implements the delivery of incident reports to client devices indicating one or more service incidents. For example, the user interface manager 218 works with the anomaly-based mitigation system 210 to enhance incident reports with clear and concise narratives of the incident, along with a list of anomalous signals connected to the incident.

As shown, the cloud computing system 202 includes the client device 250. In various implementations, the client device 250 is associated with a user (e.g., a user client device), such as an administrator who interacts with the anomaly-based mitigation system 210 to request and receive incident reports. For example, the client device 250 includes a client application 252, such as a web browser or another form of computer application for accessing the anomaly-based mitigation system 210 and/or interacting with the anomaly-based mitigation system 210.

Turning to FIG. 3, this figure provides a high-level overview for the general architecture or framework utilized by the anomaly-based mitigation system 210. In particular, FIG. 3 illustrates an example block diagram of generating an incident report user interface using various data flows to process anomalous signals. As shown, FIG. 3 includes a series of acts 300 performed by or in connection with the anomaly-based mitigation system 210.

FIG. 3 includes various elements and components previously introduced. In addition, FIG. 3 includes action flows, including a grouping logic model flow 302, a graph anomalies aggregator flow 304, and an anomalous signal group organization flow 306, which are used to create the incident report interface 142. While FIG. 3 introduces a high-level architecture of components and operations performed by the anomaly-based mitigation system 210, additional details are provided in subsequent figures, as indicated above.

As shown, the grouping logic model flow 302 includes grouping logic models 114 that generate data graphs 116 from the anomalous signals 112. Additional details regarding the gathering of anomalous signals are provided in connection with FIG. 4 below. Further information regarding the use of grouping logic models and the generation of data graphs from anomalous signals is provided below in connection with FIGS. 3, 5A-5B, and 6A-6C.

The graph anomalies aggregator flow 304 includes the graph aggregator builder 120, which generates the aggregated data graph 122. In particular, the graph aggregator builder 120 generates the aggregated data graph 122 from the data graphs 116. The graph aggregator builder 120 may also distill connections between the combined anomalous signals to generate the anomalous signals 112. Furthermore, the graph aggregator builder 120, or another component, may determine groups of connected anomalous signals from the aggregated data graph 122. Additional details regarding the aggregation 0f the data graphs into an aggregated data graph are provided below in connection with FIGS. 7A-7B.

The anomalous signal group organization flow 306 includes the enrichment of the groups of connected anomalous signals 132 for inclusion in the groups of connected anomalous signals 132. For example, the anomalous signal group organization flow 306 includes group ranking, naming, and summarization. The anomalous signal group organization flow 306 may also include determining the root cause of a group and/or identifying corrective actions. As shown, the anomalous signal group organization flow 306 includes calls to the generative AI model 230. Additional details regarding the selection and enhancement of data from connected groups of anomalous signals are provided in connection with FIG. 8.

Lastly, FIG. 3 shows the anomaly-based mitigation system 210 generating the incident report interface 142. By performing the grouping logic model flow 302, the graph anomalies aggregator flow 304, and the anomalous signal group organization flow 306, the anomaly-based mitigation system 210 creates meaningful clusters of anomalous signals, free from noisy anomalies, that accurately correspond to service incidents. By doing so, the anomaly-based mitigation system 210 can efficiently and flexibly address and/or correct service incidents based on the advanced grouping of anomalous signals. An example incident report interface is provided in FIG. 9.

As mentioned above, FIG. 4 provides additional details regarding the gathering of anomalous signals. In particular, FIG. 4 illustrates an example block diagram for obtaining anomalous signals from across a cloud computing system according to some implementations. As shown, FIG. 4 includes a series of acts 400 that the anomaly-based mitigation system 210 (or an anomaly detection system) may perform.

FIG. 4 includes signal data 402, log data 404, and other data 406. In various implementations, monitoring sources within a cloud computing system or external to a cloud computing system may track metrics associated with services, characteristics, and features. For example, signal data 402 includes metrics or telemetry data that provide insights into the performance and health of the cloud computing system. Specifically, signal data 402 can include CPU usage percentage, memory utilization, and network throughput.

In various implementations, log data 404 includes records of events that occur within the cloud computing system. In various implementations, log data 404 captures detailed information about system operations, errors, and user activities. Examples of log data 404 can include an application log entry showing a user login event or a system log recording an error message when a service fails. Additionally, other data 406 can include various types of data, such as configuration files, user-generated content, and database records.

As shown in the series of acts, the anomaly-based mitigation system 210 performs act 410 of detecting anomalous signals. In various implementations, detecting anomalous signals in the cloud computing system involves monitoring and analyzing the signal data 402, log data 404, and other relevant data types to identify patterns that deviate from normal ranges, trajectories, and/or expected values. For example, the anomaly-based mitigation system 210 can continuously track signal data, such as CPU usage and memory utilization, to detect unusual spikes or drops that may indicate potential issues. The anomaly-based mitigation system 210 can analyze records of system events and errors within log data to detect irregularities or unexpected behaviors. In various implementations, the anomaly-based mitigation system 210 utilizes machine learning algorithms and statistical methods to detect anomalies. Furthermore, the anomaly-based mitigation system 210 detects anomalous signals in real time.

Act 412 includes combining the anomalous signals. In various instances, the anomaly-based mitigation system 210 aggregates all of the anomalous signals into a combined set (e.g., a set of detected anomalous signals). In various implementations, the set of detected anomalous signals is filtered by date or time (e.g., anomalous signals within the last 20 minutes, hour, 90 minutes, 6 hours, or day). In some implementations, the anomaly-based mitigation system 210 sorts the set of detected anomalous signals based on signal source (e.g., internal vs. external, by region, by account identifiers, or by service type).

In some implementations, the set of detected anomalous signals is referred to as a group of evidence pieces. Indeed, the anomalous signals in the set of detected anomalous signals represent an investigative context for determining the causes of service incidents.

As shown, upon generating the combined set of anomalous signals, the anomaly-based mitigation system 210 concludes the series of acts 400 by advancing to the grouping logic model flow 302, which is described further in connection with the next figure.

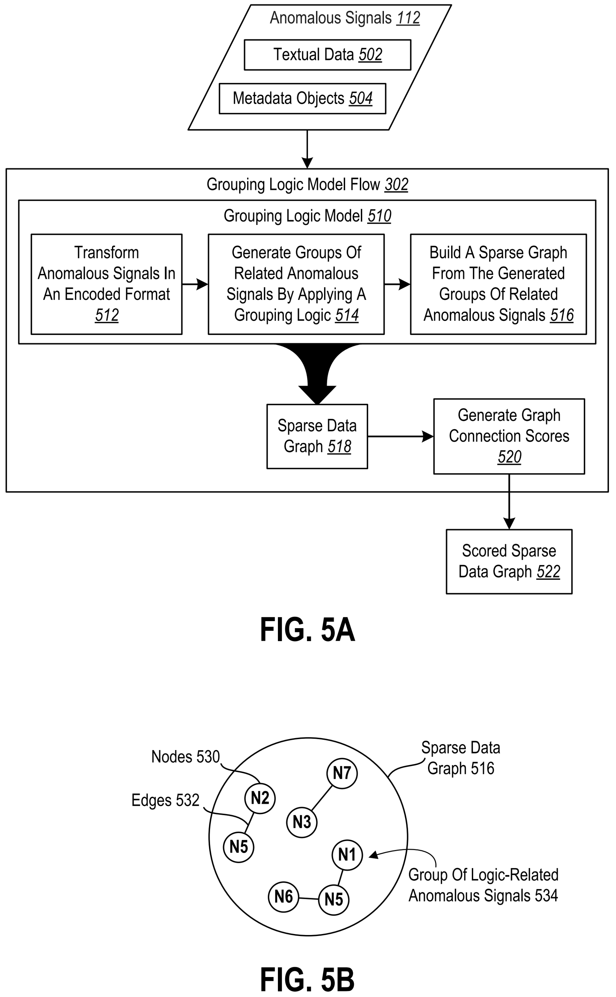

As mentioned above, FIGS. 5A-5B provide additional details for utilizing grouping logic models and generating data graphs from anomalous signals. For instance, FIGS. 5A-5B illustrate example diagrams of a generalized grouping logic model for generating a data graph from anomalous signals according to some implementations. In particular, FIG. 5A expands upon the grouping logic model flow 302, while FIG. 5B shows an illustrative example of a data graph.

FIG. 5A shows the anomaly-based mitigation system 210 generating a scored data graph 522 from anomalous signals 112 using the grouping logic model flow 302. The anomalous signals 112 include textual data 502 and metadata objects 504. In various implementations, textual data 502 includes data about an anomalous signal. The textual data 502 may be in a structured format or unformatted. For example, the textual data 502 is provided as a human-readable or machine-readable report. The textual data 502 can include various pieces of data about an anomalous signal, such as its monitoring source, event timestamp, event status, corresponding parameter values, attribute values, and characteristic values.

In some implementations, the metadata objects 504 include additional contextual information that helps in understanding and categorizing an anomalous signal. For instance, the metadata can include details such as the origin of the data, the type of anomaly detected, and any relevant historical data that may aid in diagnosing the issue. In some implementations, the textual data 502 is provided without metadata objects 504.

The grouping logic model flow 302 in FIG. 5A shows a grouping logic model 510. The grouping logic model 510 includes a set of actions that can serve as a template for generating a data graph 518. For example, the grouping logic model 510 includes a first act 512 of transforming anomalous signals into an encoded format.

In various implementations, the anomaly-based mitigation system 210 utilizes the grouping logic model 510 to convert or transform the anomalous signals 112 into an encoded format type. In some implementations, this includes generating a new data type from the anomalous signals 112. In some implementations, this includes filtering, condensing, or selecting a subset of data from the anomalous signals 112. In some implementations, the anomaly-based mitigation system 210 skips or omits the first act 512.

The second act 514 of the grouping logic model 510 includes generating groups of related anomalous signals by applying a grouping logic. For instance, the anomaly-based mitigation system 210 applies a grouping logic to the encoded anomalous signals to generate one or more groups of anomalous signals. The different grouping logics associated with the different grouping logic models may create different groups of related anomalous signals from the same set of anomalous signals as input. Indeed, different grouping logic models may identify different correlation strengths among the anomalous signals 112.

Act 516 of the grouping logic model 510 includes building a graph from the generated groups of related anomalous signals. In various implementations, the anomaly-based mitigation system 210 utilizes a graph construction algorithm to generate a data graph, such as a sparse data graph, from the set of related anomalous signals. For example, the anomaly-based mitigation system 210 converts one or more of the encoded anomalous signals into nodes and creates edges between related nodes. In this way, groups of interconnected nodes are connected within the data graph.

The anomaly-based mitigation system 210 utilizes the grouping logic model 510 to generate a data graph 518, as shown. Additionally, in some instances, the anomaly-based mitigation system 210 performs act 520 of generating graph connection scores. For example, the anomaly-based mitigation system 210 utilizes the graph construction algorithm or a graph connection scoring algorithm to generate connection strength values for the data graph 518. The scored data graph 522 shows connection weights or strength values between connected nodes in the data graph 518.

While FIG. 5A provides an example of a generalized grouping logic model, subsequent figures provide examples of more specialized grouping logic models. Additionally, while the grouping logic model 510 provides a template of actions to generate a data graph, more specialized grouping logic models may include additional and/or different actions.

FIG. 5B provides an illustrative example of act 516. As shown, act 516 includes nodes 530 and edges 532, with connected nodes forming a group of logic-related anomalous signals 534. As shown, act 516 includes Nodes 1-7, labeled as "N1" through "N7." The nodes form three groups of logic-related anomalous signals. In some implementations, a node (e.g., an anomalous signal) is not connected to any other node within act 516.

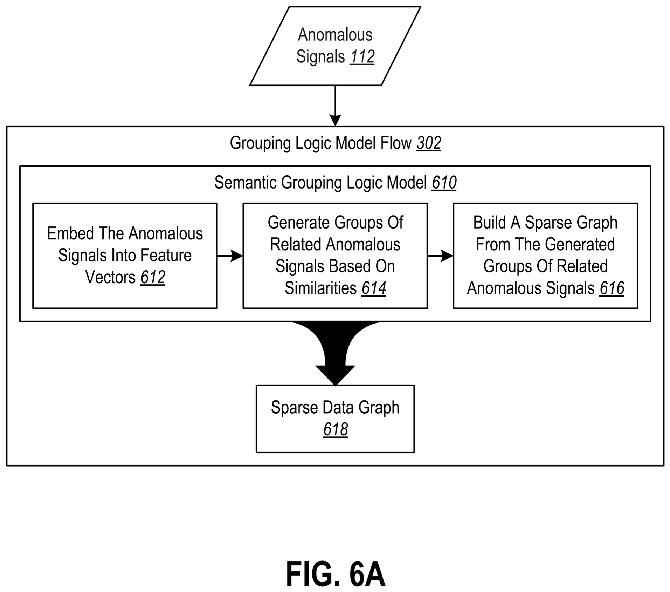

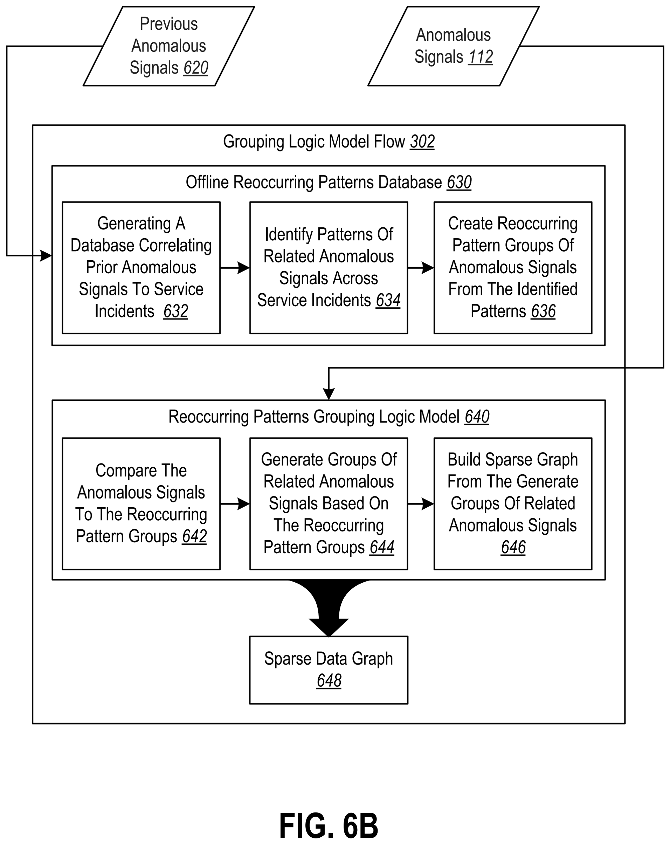

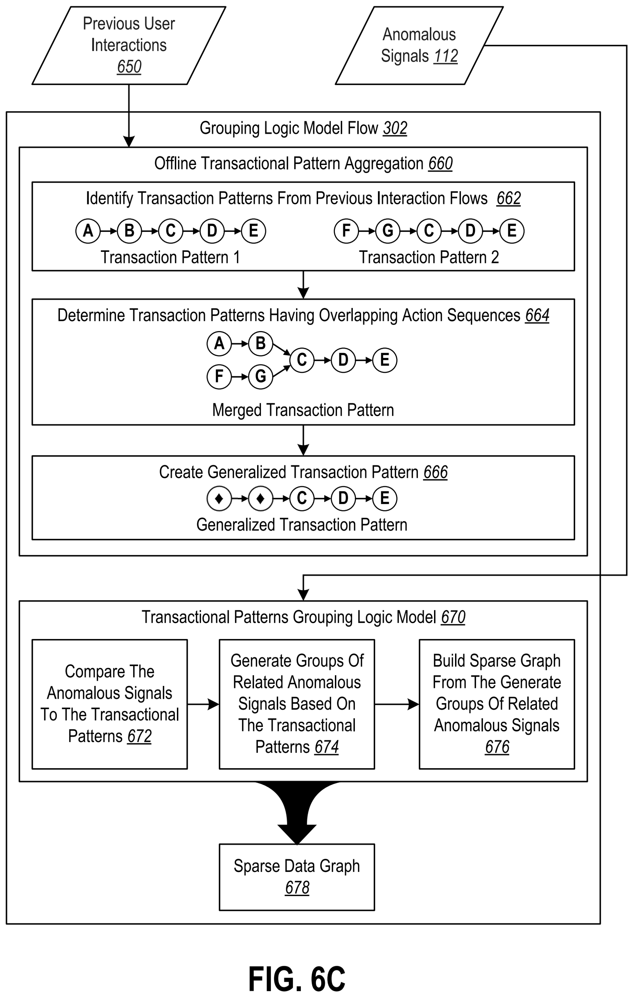

FIGS. 6A-6C illustrate example diagrams of various grouping logic models for generating data graphs from anomalous signals according to some implementations. In particular, FIG. 6A shows the grouping logic model flow 302 operating a semantic grouping logic model, FIG. 6B shows the grouping logic model flow 302 operating a reoccurring patterns grouping logic model, and FIG. 6C shows the grouping logic model flow 302 operating a transactional patterns grouping logic model.

FIGS. 6A-6C include the anomaly-based mitigation system 210 using the grouping logic model flow 302 to generate a data graph from the anomalous signals 112. For simplicity, the anomalous signals 112 omit the textual data and the metadata objects, and the grouping logic model flow 302 ends with a data graph rather than a scored data graph. However, the anomaly-based mitigation system 210 often includes these elements and operations when performing the grouping logic model flows described in connection with FIGS. 6A-6C.

While three examples of specialized grouping logic models are shown, the anomaly-based mitigation system 210 may operate additional and/or different grouping logic models. For example, the anomaly-based mitigation system 210 operates grouping logic models corresponding to semantic similarity, recurring patterns observed in historical data, shared transaction patterns, similar temporal patterns, causality relationships, business logic considerations, domain knowledge-based considerations, and predefined metadata, among other grouping logic models.

Turning to FIG. 6A, the grouping logic model flow 302 includes a semantic grouping logic model 610. In many instances, the semantic grouping logic model utilizes semantic logic to determine whether related anomalous signals are semantically similar. As shown, the anomaly-based mitigation system 210 provides the anomalous signals 112 to the semantic grouping logic model 610.

The semantic grouping logic model 610 includes a first act 612 of embedding the anomalous signals into feature vectors. For example, the anomaly-based mitigation system 210 uses an embedding neural network or a generative AI model to generate feature vectors of the anomalous signals 112. The anomaly-based mitigation system 210 can plot the feature vectors of the anomalous signals into an embedding space. In some instances, the anomaly-based mitigation system 210 preprocesses the anomalous signals 112 to remove noise or select particular elements to generate corresponding feature vectors.

The second act 614 of the semantic grouping logic model 610 includes generating groups of related anomalous signals based on similarities. For example, the anomaly-based mitigation system 210 utilizes cosine similarities or Euclidean distances to determine relationships between pairs of embeddings (e.g., feature vectors). If a pair is within a threshold distance, the anomaly-based mitigation system 210 creates a connection between the two embeddings. If a pair does not meet the threshold distance, the anomaly-based mitigation system 210 does not generate a connection between the two anomalous signal embeddings.

As described above, the anomaly-based mitigation system 210 may form groups of related anomalous signals based on connected anomalous signal embeddings. For example, the anomaly-based mitigation system 210 determines clusters of anomalous signal embeddings that include one or more connections between two or more embeddings.

The third act 616 of the semantic grouping logic model 610 includes building a graph from the generated groups of related anomalous signals. As before, the anomaly-based mitigation system 210 generates a data graph that represents the connected clusters of related anomalous signals determined by the semantic grouping logic model 610. As shown, the semantic grouping logic model 610 generates a data graph 618 that includes groups of related anomalous signals based on semantic similarities.

FIG. 6B shows a grouping logic model flow 302 that includes a reoccurring patterns grouping logic model 640. As shown, the anomaly-based mitigation system 210 uses the reoccurring patterns grouping logic model 640 to generate a data graph 648 from the anomalous signals 112, where the data graph 648 includes groups of related anomalous signals based on reoccurring patterns. In this way, the anomaly-based mitigation system 210 determines data graphs based on groupings of anomalous signals that have previously been found to be related based on service incidents.

The grouping logic model flow 302 in FIG. 6B also includes a reoccurring patterns database 630, which the reoccurring patterns grouping logic model 640 uses to generate the data graph 648. As shown, the anomaly-based mitigation system 210 can generate the reoccurring patterns database 630 based on previous anomalous signals 620. In various instances, the reoccurring patterns database 630 correlates anomalous signals to service incidents.

To elaborate, in one or more implementations, the reoccurring patterns database 630 (or another type of data store) includes act 632 of generating a database correlating prior anomalous signals to service incidents. For example, the anomaly-based mitigation system 210 identifies anomalous signals that correspond to previously detected incidents. In various implementations, the reoccurring patterns database 630 is an offline reoccurring patterns database.

Act 634 includes identifying patterns of related anomalous signals across service incidents. For instance, the anomaly-based mitigation system 210 determines patterns between anomalous signals that are found together with incidents. For example, if Signal A and Signal B are found together in multiple incidents, the anomaly-based mitigation system 210 determines a pattern or sequence connecting these anomalous signals. Accordingly, act 636 includes creating reoccurring pattern groups of anomalous signals from the identified patterns. The anomaly-based mitigation system 210 may populate the reoccurring patterns database 630 with identified reoccurring pattern groups.

Next, when anomalous signals 112 are detected, the anomaly-based mitigation system 210 may utilize the reoccurring patterns grouping logic model 640 in real time to determine the data graph 648. As shown, the reoccurring patterns grouping logic model 640 includes a first act 642 of comparing the anomalous signals to the reoccurring pattern groups. For instance, the anomaly-based mitigation system 210 compares the anomalous signals 112 to the reoccurring patterns database 630 to determine matching reoccurring patterns. In some implementations, the anomaly-based mitigation system 210 transforms the anomalous signals 112 into feature vectors and compares for reoccurring patterns in embedding space (e.g., the anomaly-based mitigation system 210 compares anomalous signals feature vectors to reoccurring embedding sequences from the reoccurring patterns database 630).

The second act 644 of the reoccurring patterns grouping logic model 640 includes generating groups of related anomalous signals based on reoccurring pattern groups. In some cases, for each identified matching sequence, the anomaly-based mitigation system 210 forms a group of related anomalous signals based on reoccurring patterns. In some instances, the anomaly-based mitigation system 210 filters out anomalous signals that do not match any reoccurring patterns.

The third act 646 of the reoccurring patterns grouping logic model 640 includes building a graph from the generated groups of related anomalous signals. As before, the anomaly-based mitigation system 210 generates a data graph that represents the connected clusters of related anomalous signals determined by the reoccurring patterns grouping logic model 640. As shown, the reoccurring patterns grouping logic model 640 generates the data graph 648 that includes groups of related anomalous signals based on reoccurring patterns.

FIG. 6C shows a grouping logic model flow 302 that includes a transactional patterns grouping logic model 670. As shown, the anomaly-based mitigation system 210 utilizes the transactional patterns grouping logic model 670 to generate a data graph 678 from the anomalous signals 112, where the data graph 678 includes groups of related anomalous signals based on user or system transactional sequences or patterns. In this way, the anomaly-based mitigation system 210 determines data graphs based on groupings of anomalous signals that correspond to action or user interface flows.

The grouping logic model flow 302 in FIG. 6C also includes a transactional pattern aggregation 660, which the transactional patterns grouping logic model 670 uses to generate the data graph 678. As shown, the anomaly-based mitigation system 210 can generate the transactional pattern aggregation 660 based on previous user interactions 650 (or system action sequences).

To elaborate, in one or more implementations, the transactional pattern aggregation 660, which can include a database or another type of data store, includes act 662 of identifying transaction patterns from previous interaction flows. For example, transaction patterns can include transactions that are part of in an interaction flow. The anomaly-based mitigation system 210 can identify these transactions from previous user interactions. In some implementations, the previous user interactions 650 are associated with previous anomalous signals.

For context, many parts of a cloud system belong to action or user interface flows. For example, when a user visits a website, an interaction flow includes various available actions on the website, such as navigating to web pages, logging in, or accessing a database. Each action or event performed within the interaction creates a chain or sequence of events. For instance, a transaction chain includes 1) visiting a website, 2) requesting data from a database, and 3) accessing the data from the database. The anomaly-based mitigation system 210 can identify this and other sequences of transaction patterns.

In various implementations, a transaction chain links events or actions to previous events or actions based on action or element identifiers. For example, elements, locations, and actions may include transaction identifiers. The anomaly-based mitigation system 210 may use the transaction identifier of a parent element as a key or index for a child element, forming a transaction pattern (e.g., an event chain or transaction chain).

Act 664 includes determining transaction patterns that have overlapping action sequences. In various implementations, the anomaly-based mitigation system 210 determines when multiple transaction patterns have one, two, or more overlapping action sequences. For instance, if Transaction Pattern 1 includes a transaction chain of A-B-C-D-E, and Transaction Pattern 2 includes a transaction chain of F-G-C-D-E, then the anomaly-based mitigation system 210 can determine an overlap of the last three actions (e.g., C-D-E). In various implementations, the anomaly-based mitigation system 210 creates a merged transaction pattern between two or more overlapping patterns.

Act 666 includes creating a generalized transaction pattern. For example, in the above example, the anomaly-based mitigation system 210 generates a generalized transaction pattern of *-*-C-D-E, where "*" represents a wildcard action (or one or more actions that have been merged together).

In various implementations, the transactional pattern aggregation 660 includes identified transaction patterns, including merged transaction patterns and/or generalized transaction patterns. As described below, the anomaly-based mitigation system 210 uses these to determine clusters of related anomalous signals, as described next.

To elaborate, when anomalous signals 112 are detected, the anomaly-based mitigation system 210 may utilize the transactional patterns grouping logic model 670 in real time to determine the data graph 678. As shown, the transactional patterns grouping logic model 670 includes a first act 672 of comparing the anomalous signals to the transactional patterns. For instance, the anomaly-based mitigation system 210 compares the anomalous signals 112 to the transactional pattern aggregation 660 to determine matching transactional patterns. In some implementations, the anomaly-based mitigation system 210 transforms the anomalous signals 112 into feature vectors and compares them for transactional patterns in embedding space, similar to what is described above.

The second act 674 of the transactional patterns grouping logic model 670 includes generating groups of related anomalous signals based on transactional patterns. In some cases, for each identified matching transactional pattern, the anomaly-based mitigation system 210 forms a group of related anomalous signals. In some instances, the anomaly-based mitigation system 210 filters out anomalous signals that do not match any transactional patterns.

The third act 676 of the transactional patterns grouping logic model 670 includes building a graph from the generated groups of related anomalous signals. As before, the anomaly-based mitigation system 210 generates a data graph that represents the connected clusters of related anomalous signals determined by the transactional patterns grouping logic model 670. As shown, the transactional patterns grouping logic model 670 generates the data graph 678 that includes groups of related anomalous signals based on transactional patterns.

As mentioned above, the anomaly-based mitigation system 210 may generate and/or utilize additional and/or different grouping logic models to generate selected generative documents from the anomalous signals 112. Indeed, in various implementations, the anomaly-based mitigation system 210 provides the same (or overlapping sets of) anomalous signals 112 to multiple different grouping logic models to create different instances of data graphs, where the different data graphs focus on the different grouping logics and/or correlation connections between grouping logic models.

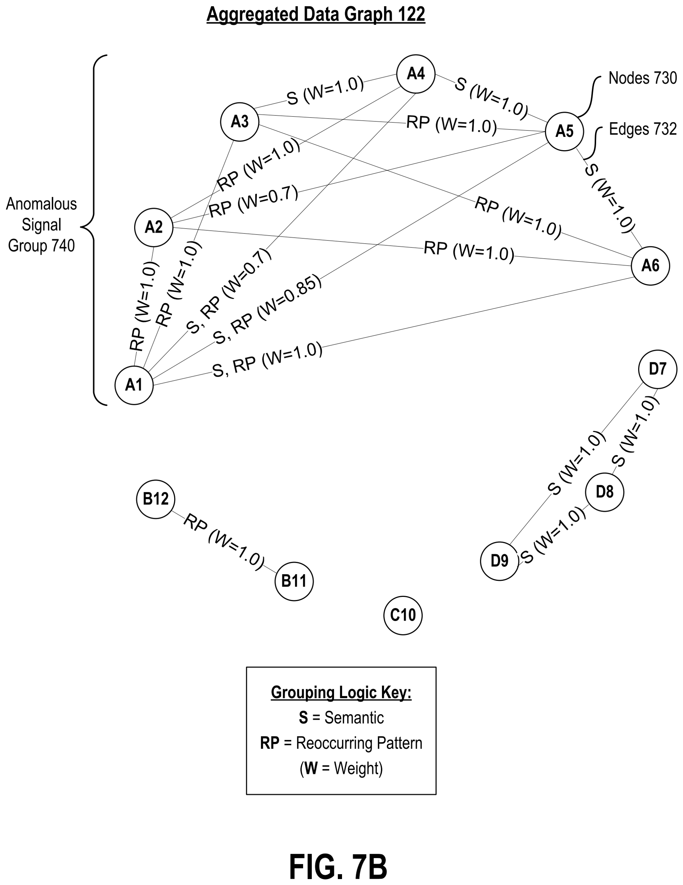

As mentioned above, FIGS. 7A-7B provide additional detail about aggregating the data graphs into an aggregated data graph. For instance, FIGS. 7A-7B illustrate example diagrams of generating an aggregated data graph from multiple data graphs. In particular, FIG. 7A provides additional detail regarding the graph anomalies aggregator flow 304, while FIG. 7B provides an illustrative example of an aggregated data graph.

As shown, FIG. 7A includes the anomaly-based mitigation system 210 generating the aggregated data graph 122 from scored data graphs 702 using the graph anomalies aggregator flow 304. In various implementations, the scored data graphs 702 include multiple data graphs from the multiple grouping logic models, where the multiple data graphs have been individually scored to indicate connection strengths. In some instances, the anomaly-based mitigation system 210 provides the multiple data graphs directly to the graph anomalies aggregator flow 304.

The graph anomalies aggregator flow 304 includes the graph aggregator builder 120 with a graph merging model 710 that generates an initial aggregated data graph 712. The graph anomalies aggregator flow 304 also includes a set of actions for modifying the initial aggregated data graph 712 into the aggregated data graph 122, which includes connected anomalous signal groups 720.

In various implementations, the graph merging model 710 combines the scored data graphs 702 into a single aggregated data graph. For example, the graph merging model 710 utilizes one or more graph merging algorithms to form connections between all of the graphs formed by the grouping logic model flows. For instance, the graph merging model 710 adds the nodes from two or more of the data graphs (e.g., scored data graphs 702). The graph merging model 710 then adds the connections from the data graphs.

In various implementations, the graph merging model 710 uses weighted and/or normalized scores when adding connections between nodes. For instance, the graph merging model 710 combines all of the connection scores between two nodes across the scored data graphs 702 to determine a weighted connection score. In some cases, the score may be an average. In some cases, certain grouping logic model flows are given greater weight.

In some instances, the initial aggregated data graph 712 generated by the graph merging model 710 includes (or excludes) connections between pairs of nodes not connected in individual data graphs. As a result, the different connection pairs between the nodes modify the grouping in the aggregated data graph from the data graphs.

In some implementations, the graph merging model 710 adds labels to a connection or edge to indicate the grouping logic model that included the connection. In some implementations, a connection includes multiple grouping logic model labels when multiple models include a connection between a pair of nodes.

As shown in the graph anomalies aggregator flow 304, the anomaly-based mitigation system 210 can perform additional actions on the initial aggregated data graph 712. For example, the graph anomalies aggregator flow 304 includes act 714 of filtering connections based on thresholds. In various implementations, the anomaly-based mitigation system 210 removes weak connections between node pairs when their connection strength is below a threshold value. For instance, for connection scores normalized between 0 and 1, the anomaly-based mitigation system 210 removes edges with scores of 0.6 or less. In some implementations, the connection strength threshold is a configurable parameter. In various implementations, the anomaly-based mitigation system 210 may automatically adjust the connection strength threshold to increase or decrease the total number of connections.

In various implementations, upon removing weak connections, the graph anomalies aggregator flow 304 outputs the aggregated data graph 122. As mentioned above, the different grouping logic model flows capture different viewpoints and connection strengths among the set of anomalous signals. Accordingly, by combining the different data graphs into an aggregated data graph, the anomaly-based mitigation system 210 can capture the full connection scope among the anomalous signals. This, in turn, generates an aggregated data graph 122 that provides improved accuracy in determining anomalous signal groupings and efficiency in resolving service incidents associated with an anomalous signal group.

Act 716 includes creating anomalous signal groups. In one or more implementations, upon generating the aggregated data graph 122, the anomaly-based mitigation system 210 also determines the anomalous signal groupings based on connected clusters, referred to as connected anomalous signal groups 720. In some implementations, a cluster includes several nodes. In some implementations, a single node with no connections forms a cluster or anomalous signal group.

FIG. 7B illustrates an example of an aggregated data graph. The aggregated data graph 122 includes nodes 730 and edges 732, where each node represents an anomalous signal, and the edges represent connections between pairs of anomalous signals. As shown, connection strength scores have weights of 0.7, 0.85, and 1.0. The edges also indicate whether a connection is based on a semantic grouping logic model ("S"), a reoccurring pattern grouping logic model ("RP"), or both.

The aggregated data graph 122 includes four groups of anomalous signal, shown as different node clusters. The top-ranked anomalous signal group includes six nodes. The other groups (bottom, left to right) include two nodes, one node, and three nodes. Each node in an anomalous signal group 740 of two or more nodes is connected to at least one other node.

As mentioned above, FIG. 8 provides additional details regarding the selection and enhancement of data from connected groups of anomalous signals. In particular, FIG. 8 illustrates an example block diagram of refining connected anomalous signal groups identified from the aggregated data graph according to some implementations. As mentioned above, FIG. 8 provides additional details on the anomalous signal group organization flow 306.

As shown, the anomaly-based mitigation system 210 refines the aggregated data graph 122 using the graph anomalies aggregator flow 304 and the generative AI model 230 (which may represent multiple generative AI models). The graph anomalies aggregator flow 304 includes a group refinement model 802 and a group user interface creator 812. The group refinement model 802 includes a group ranker 804, a group title creator 806, a group root cause generator 808, and a group summary generator 810.

In various implementations, the group ranker 804 ranks the connected anomalous signal groups 720. For instance, the anomaly-based mitigation system 210 utilizes the group ranker 804 to rank the connected anomalous signal groups 720 based on one or more factors, attributes, and/or characteristics. In some instances, the group ranker 804 ranks the groups based on size, such as the number of nodes or the number of connections, with higher values being ranked first. In some implementations, the group ranker 804 ranks groups according to their total connection strength weights. Other factors include priority or severity levels indicated in the nodes of a group, the source of the anomalous signal in a group, and the number, type, or count of grouping logic models per group (e.g., the count of grouping logic models indicated in the connections of each group). In some implementations, the group ranker 804 utilizes the generative AI model 230 or another model to rank the connected anomalous signal groups 720 according to one or more factors.

In one or more implementations, the group ranker 804 removes or de-prioritizes connected anomalous signal groups that do not meet a threshold rank. For example, the group ranker 804 removes the bottom 25% of groups. In some implementations, the group ranker 804 keeps only a top number of groups (e.g., only the top three groups are initially advanced to the user). Overall, the group ranker 804 can rank and reorder the connected anomalous signal groups 720.

The group title creator 806, in various implementations, determines a succinct title for each group that summarizes the anomalous signals included in the group and/or commonalities between the anomalous signals in the group. In various implementations, a group title should be within a threshold number of characters in length. In one or more implementations, the group title should be human-readable.

In some implementations, the group title creator 806 utilizes the generative AI model 230 to distill the anomalous signals in a group into a group title. For example, the anomaly-based mitigation system 210 provides the anomalous signals in a group along with a group title prompt, which causes the generative AI model 230 to generate a title for the connected anomalous signals group. In various implementations, the prompt instructs the generative AI model 230 to consider the attributes of each anomalous signal when creating a group title.

The group root cause generator 808, in one or more implementations, determines a root cause (e.g., a cloud incident root cause) based on the anomalous signals in a connected anomalous signals group. For example, the anomaly-based mitigation system 210 provides the anomalous signals in a group along with a root cause prompt to the generative AI model 230 to determine and generate a root cause. The generative AI model 230 returns one or more likely root causes within the cloud computing system that triggered the anomalous signals in the connected anomalous signals group.

To elaborate, in various implementations, the root cause prompt directs the generative AI model 230 to generate root causes likely responsible for the anomalies and remedies to mitigate or address the identified root causes. In some instances, the anomaly-based mitigation system 210 provides both a root cause prompt and a mitigation prompt for a group of connected anomalous signals. In some instances, the root cause prompt includes a request for mitigation solutions.

In many scenarios, the anomaly-based mitigation system 210 supplies the group of connected anomalous signals (or at least grants access to them) to the generative AI model 230 for processing in conjunction with the root cause prompt. In additional cases, the anomaly-based mitigation system 210 provides the corresponding attributes, characteristics, and/or metadata of the anomalous signals, such as signal names, anomaly directions, dimensions, resource types, sampling types, or anomaly types, to the generative AI model 230 to provide additional context while processing the anomalous signals.

As mentioned above, the root cause prompt can direct the generative AI model 230 to determine the root cause and/or potential root causes given a group of connected anomalous signals. For example, the root cause prompt may be as follows: "Analyze the input signal anomalies and provide a list of root causes that may have caused these anomalies." Furthermore, the anomaly-based mitigation system 210 may provide additional contextual information to the generative AI model 230 to aid in determining potential root causes for the connected group of anomalous signals.

Additionally, as mentioned above, the group root cause generator 808 can provide or include a mitigation prompt for a given group of connected anomalous signals. In many implementations, the mitigation prompt instructs the generative AI model 230 to determine possible mitigation actions for the incident based on the set of anomalous signals and/or the identified root causes. For example, the mitigation prompt may be phrased as follows: "Given the anomalous signals, what are some potential mitigation actions for the incident?" or "Given these identified root causes, what are some potential mitigation actions?"

In various implementations, the group summary generator 810 includes determining summaries for the groups of connected anomalous signals. For example, the group summary generator 810 utilizes the generative AI model 230 to generate a summary for a group of connected anomalous signals. For instance, the group summary generator 810 provides a group summary prompt to the generative AI model 230.

To elaborate, in some instances, the group summary generator 810 provides a summary prompt for or with the set of anomalous signals to the generative AI model 230. For example, the group summary generator 810 directs the generative AI model 230 to generate and provide clear and concise text narratives that deliver an overview summary of the detected anomalies. In some implementations, the anomaly-based mitigation system 210 provides additional or alternative prompts.

In various instances, the summary prompt instructs the generative AI model 230 to generate a text narrative response that succinctly summarizes the anomalous signals. For example, the summary prompt might be phrased as follows: "Summarize the accompanying input data of anomalous signals and provide a brief overview narrative of the corresponding incident." In various implementations, the anomaly-based mitigation system 210 also includes contextual information about one or more anomalous signals.

As mentioned earlier, the graph anomalies aggregator flow 304 includes the group user interface creator 812. In various implementations, the group user interface creator 812 creates a user interface layout for one or more of the connected anomalous signal groups 720. For example, the anomaly-based mitigation system 210 utilizes the group user interface creator 812 to create an overall incident report for failures within the cloud computing system and summary reports for one or more of the connected anomalous signal groups 720.

In various implementations, when creating summaries for connected anomalous signal groups, the anomaly-based mitigation system 210 utilizes the group user interface creator 812 to create a layout that presents the group title, the root cause, the group summary, and mitigation steps in a dynamic, user-friendly arrangement. Then, when a group is selected within an incident report interface, the anomaly-based mitigation system 210 can provide the anomalous signal summary.

To illustrate, FIG. 9 shows an example graphical user interface for displaying an incident report of a service incident on a client device according to some implementations. As shown, FIG. 9 includes a computing device 900 with a display showing a graphical user interface 902. For example, the graphical user interface 902 is displayed as part of a client application that allows access to the functions of the anomaly-based mitigation system 210. In some implementations, the graphical user interface 902 is provided as part of an anomaly detection system or a metric management system.

As shown, the graphical user interface 902 includes an interactive incident report interface 904 that provides information on one or more service incidents, such as an overview 906 and potential investigative issues 908. The potential investigative issues 908 may correspond to the connected anomalous signal groups. In some implementations, one or more of the connected anomalous signal groups are presented as tabs or other selectable elements. For example, a first potential investigative issue shows a connected anomalous signal group with the title "High CPU Utilization" being selected.

In addition, when a connected anomalous signal group is selected, the interactive incident report interface 904 can include additional information about the group, as shown and described above. In particular, the interactive incident report interface 904 can display an anomalous signal group summary 910, which can include a summary of what happened (e.g., an overview), a possible explanation (e.g., the root cause), and mitigation steps (e.g., corrective actions). In some implementations, if the anomaly-based mitigation system 210 automatically performed one or more of the corrective actions, the anomalous signal group summary 910 can indicate what actions were taken and whether they resolved the corresponding incident and/or reduced the number of anomalous signals in the group.

As mentioned above, in various implementations, the anomaly-based mitigation system 210 utilizes one or more generative AI models to generate the interactive incident report interface 904, the potential investigative issues 908, and/or anomalous signal group summaries. In some implementations, the interactive incident report interface 904 may include additional or different input fields. Additionally, in some cases, the incident report request is made via a different interactive interface.

In some instances, the interactive incident report interface 904 includes a list of resources and incident metric graphs associated with the service incident and/or anomalous signals. For example, the interactive incident report interface 904 includes time series graphs for metrics corresponding to a group of connected anomalous signals. In some implementations, the anomaly-based mitigation system 210 provides text narratives for anomalous signals to deliver clear and concise information about the incident, the corresponding anomalous signals, root causes, and mitigation actions.

As mentioned above, in various implementations, the anomaly-based mitigation system 210 performs one or more corrective actions automatically based on the interactive incident report interface 904. For example, the anomaly-based mitigation system 210 identifies one or more corrective actions (e.g., mitigation actions or steps) associated with a group of connected anomalous signals and selects one of the corrective actions. If a corrective action has been previously authorized, the anomaly-based mitigation system 210 may automatically execute the corrective action (e.g., restart a service, re-upload a data resource, reboot a VM). In this way, in various implementations, the anomaly-based mitigation system 210 detects, addresses, and sometimes resolves issues causing anomalous signals automatically, without user interaction or intervention. In some instances, the anomaly-based mitigation system 210 may provide one or more corrective options within the interactive incident report interface 904 and options to execute corrective actions on demand.

Turning now to FIG. 10, this figure illustrates an example flowchart that includes a series of acts 1000 for utilizing the anomaly-based mitigation system according to some implementations. In particular, FIG. 10 illustrates an example series of acts of a computer-implemented method for generating anomaly groupings for incidents in a computing system using one or more generative artificial intelligence (AI) models according to some implementations.

While FIG. 10 illustrates acts according to one or more implementations, alternative implementations may omit, add to, reorder, and/or modify any of the acts shown. Furthermore, the acts of FIG. 10 can be performed as part of a method (e.g., a computer-implemented method). Alternatively, a computer-readable medium can include instructions that, when executed by a processing system with a processor, cause a computing device to perform the acts of FIG. 10.

In some implementations, a system (e.g., a processing system comprising a processor) can perform the acts of FIG. 10. For example, the acts include a system for reporting anomalous metrics in a cloud computing system or another computing system. In some instances, the system includes a processing system and a computer memory including instructions that, when executed by the processing system, cause the system to perform various actions or steps.

As shown, the series of acts 1000 includes act 1010 of obtaining anomalous signals corresponding to a computing system. For instance, in example implementations, act 1010 involves obtaining a set of detected anomalous signals corresponding to a cloud computing system. In some instances, act 1010 includes generating detected anomalous signals from metric signals and log data that are outside corresponding tolerance ranges. In some instances, the set of detected anomalous signals includes textual data and metadata objects corresponding to the detected anomalous signals.

As further shown, the series of acts 1000 includes act 1020 of generating multiple data graphs using different grouping logic models. For instance, in example implementations, act 1020 involves generating, using multiple different grouping logic models, multiple data graphs that each include groups of related anomalous signals from the set of detected anomalous signals. In various implementations, the groups of related anomalous signals from the multiple different grouping logic models differ from each other or one another.

In some implementations, the multiple data graphs generated with the multiple different grouping logic models include different groups of related anomalous signals, and a multiple data graph generated by a grouping logic model includes a subset of anomalous signals from the set of detected anomalous signals. In various implementations, a grouping logic model from the multiple different grouping logic models includes transforming the set of detected anomalous signals into an encoded format to create a set of encoded anomalous signals and generating one or more groups of related anomalous signals by applying a grouping logic to connect related anomalous signals from the set of encoded anomalous signals. In various implementations, act 1020 includes generating a data graph from the one or more groups of related anomalous signals and determining scores between nodes of the data graph based on connection strength between adjacent nodes.

In some implementations, a semantic grouping logic model from the multiple different grouping logic models includes transforming the set of detected anomalous signals into semantic embeddings to create a set of anomalous signal embeddings, generating one or more groups of semantically related anomalous signals by determining groups of anomalous signals from the set of anomalous signal embeddings that are within a threshold distance of each other, and generating a semantic data graph from the groups of anomalous signals.

In various implementations, a reoccurring pattern grouping logic model from the multiple different grouping logic models includes comparing the set of detected anomalous signals to reoccurring patterns of prior anomalous signals, determining groups of reoccurring pattern anomalous signals based on identifying matches between the set of detected anomalous signals and the reoccurring patterns, and generating a reoccurring pattern data graph from the groups of reoccurring pattern anomalous signals. In one or more implementations, act 1020 includes generating a reoccurring pattern database that correlates sets of prior anomalous signals with prior service incidents, and generating the reoccurring patterns from the sets of prior anomalous signals based on two or more prior anomalous signals appearing together in one or more prior service incidents above a threshold number of occurrences.

In some implementations, a transactional pattern grouping logic model from the multiple different grouping logic models includes comparing actions corresponding to the set of detected anomalous signals to transactional patterns to identify action sequences, determining groups of transactional pattern anomalous signals by combining anomalous signals from the set of detected anomalous signals that correspond to the action sequences, and generating a transactional pattern data graph from the groups of transactional pattern anomalous signals. In various implementations, act 1020 includes generating a transactional pattern database of the transactional patterns that includes the action sequences having connected actions within the cloud computing system. In some implementations, act 1020 includes merging the action sequences within the transactional pattern database that share a subset of overlapping action sequences.

As further shown, the series of acts 1000 includes act 1030 of generating an aggregated data graph by combining the multiple data graphs. For instance, in example implementations, act 1030 involves generating an aggregated data graph by combining the multiple data graphs to form multiple groups of connected anomalous signals. In some implementations, the aggregated data graph shows connections between related nodes, with the connections indicating a connection strength between two adjacent connected nodes and indicating each of the multiple different grouping logic models that indicated a connection between the two adjacent connected nodes.

In some implementations, act 1030 includes generating the aggregated data graph by combining nodes and connections from the multiple data graphs, with the aggregated data graph forming the multiple groups of connected anomalous signals. In some implementations, combining the nodes and the connections from the multiple data graphs includes mapping the nodes and the connections from each of the multiple data graphs into the aggregated data graph using a graph merging model, refining the aggregated data graph by removing connections that do not meet a minimum threshold connection strength value, and creating the multiple groups of connected anomalous signals based on clusters of connected anomalous signals.

As further shown, the series of acts 1000 includes act 1040 of refining groups of connected anomalous signals identified in the aggregated data graph using a generative AI model. For instance, in example implementations, act 1040 involves determining a root cause for a first group of the multiple groups of connected anomalous signals based on a first set of anomalous signals in the first group using a generative AI model. In some instances, determining the root cause for the first group includes providing the first set of anomalous signals in the first group to the generative AI model with a prompt to return a cloud incident root cause based on the first set of anomalous signals in the first group.

In various implementations, act 1040 includes ranking the multiple groups of connected anomalous signals in the aggregated data graph based on one or more anomalous signal characteristics and generating a first group name for the first group of the multiple groups of connected anomalous signals. In some implementations, the first group name for the first group of the multiple groups of connected anomalous signals is generated by distilling the first set of anomalous signals in the first group using the generative AI model to create a first group of distilled anomalous signals and determining the first group name for the first group based on providing the first group of distilled anomalous signals to the generative AI model. In some instances, determining the root cause for the first group includes providing the first set of anomalous signals in the first group to the generative AI model with a prompt to return a cloud incident root cause based on the first set of anomalous signals in the first group.

As further shown, the series of acts 1000 includes act 1050 of providing the groups of connected anomalous signals within an incident report interface. For instance, in example implementations, act 1050 involves providing the multiple groups of connected anomalous signals within an incident report interface, the incident report interface including a first group for a first set of anomalous signals. In various implementations, act 1050 includes providing the multiple groups of connected anomalous signals within an incident report interface, the incident report interface including the first group and the root cause for the first set of anomalous signals.

In some implementations, the incident report interface identifies the first group based on the first group name determined for the first group and/or includes a corrective action for resolving the first set of anomalous signals. In some implementations, act 1050 includes causing the system to execute the corrective action on a cloud computing system to address or resolve a service incident corresponding to the first set of anomalous signals.

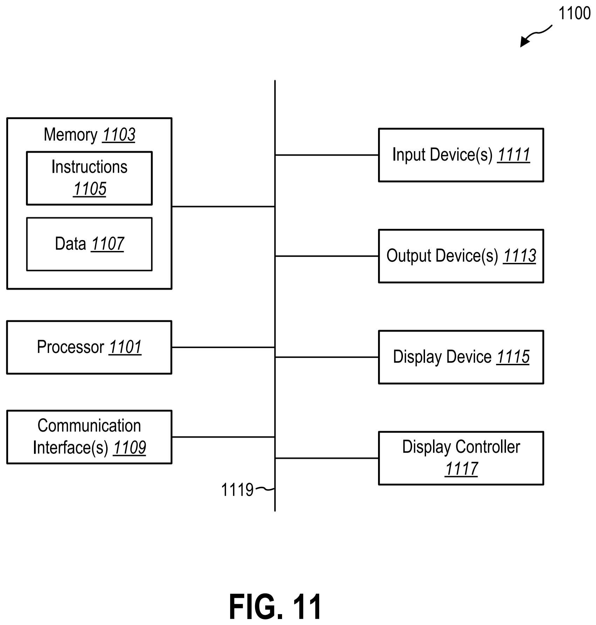

FIG. 11 illustrates certain components that may be included within a computer system 1100. The computer system 1100 may be used to implement the various computing devices, components, and systems described herein (e.g., by performing computer-implemented instructions). As used herein, a "computing device" refers to electronic components that perform a set of operations based on a set of programmed instructions. Computing devices include groups of electronic components, client devices, server devices, etc.

In various implementations, the computer system 1100 represents one or more of the client devices, server devices, or other computing devices described above. For example, the computer system 1100 may refer to various types of network devices capable of accessing data on a network, a cloud computing system, or another system. For instance, a client device may refer to a mobile device such as a mobile telephone, a smartphone, a personal digital assistant (PDA), a tablet, a laptop, or a wearable computing device (e.g., a headset or smartwatch). A client device may also refer to a non-mobile device such as a desktop computer, a server node (e.g., from another cloud computing system), or another non-portable device.

The computer system 1100 includes a processing system including a processor 1101. The processor 1101 may be a general-purpose single- or multi-chip microprocessor (e.g., an Advanced Reduced Instruction Set Computer (RISC) Machine (ARM)), a special-purpose microprocessor (e.g., a digital signal processor (DSP)), a microcontroller, a programmable gate array, etc. The processor 1101 may be referred to as a central processing unit (CPU) and may cause computer-implemented instructions to be performed. Although the processor 1101 shown is just a single processor in the computer system 1100 of FIG. 11, in an alternative configuration, a combination of processors (e.g., an ARM and DSP) could be used.

The computer system 1100 also includes memory 1103 in electronic communication with the processor 1101. The memory 1103 may be any electronic component capable of storing electronic information. For example, the memory 1103 may be embodied as random-access memory (RAM), read-only memory (ROM), magnetic disk storage media, optical storage media, flash memory devices in RAM, on-board memory included with the processor, erasable programmable read-only memory (EPROM), electrically erasable programmable read-only memory (EEPROM), registers, and so forth, including combinations thereof.

The instructions 1105 and the data 1107 may be stored in the memory 1103. The instructions 1105 may be executable by the processor 1101 to implement some or all of the functionality disclosed herein. Executing the instructions 1105 may involve the use of the data 1107 that is stored in the memory 1103. Any of the various examples of modules and components described herein may be implemented, partially or wholly, as instructions 1105 stored in memory 1103 and executed by the processor 1101. Any of the various examples of data described herein may be among the data 1107 that is stored in memory 1103 and used during the execution of the instructions 1105 by the processor 1101.

A computer system 1100 may also include one or more communication interface(s) 1109 for communicating with other electronic devices. The one or more communication interface(s) 1109 may be based on wired communication technology, wireless communication technology, or both. Some examples of the one or more communication interface(s) 1109 include a Universal Serial Bus (USB), an Ethernet adapter, a wireless adapter that operates according to an Institute of Electrical and Electronics Engineers (IEEE) 1102.11 wireless communication protocol, a Bluetooth^{®} wireless communication adapter, and an infrared (IR) communication port.

A computer system 1100 may also include one or more input device(s) 1111 and one or more output device(s) 1113. Some examples of the one or more input device(s) 1111 include a keyboard, mouse, microphone, remote control device, button, joystick, trackball, touchpad, and light pen. Some examples of the one or more output device(s) 1113 include a speaker and a printer. A specific type of output device that is typically included in a computer system 1100 is a display device 1115. The display device 1115 used with implementations disclosed herein may utilize any suitable image projection technology, such as liquid crystal display (LCD), light-emitting diode (LED), gas plasma, electroluminescence, or the like. A display controller 1117 may also be provided, for converting data 1107 stored in the memory 1103 into text, graphics, and/or moving images (as appropriate) shown on the display device 1115.

The various components of the computer system 1100 may be coupled together by one or more buses, which may include a power bus, a control signal bus, a status signal bus, a data bus, etc. For clarity, the various buses are illustrated in FIG. 11 as a bus system 1119.

This disclosure describes a subjective data application system in the framework of a network. In this disclosure, a "network" refers to one or more data links that enable electronic data transport between computer systems, modules, and other electronic devices. A network may include public networks such as the Internet as well as private networks. When information is transferred or provided over a network or another communication connection (either hardwired, wireless, or both), the computer correctly views the connection as a transmission medium. Transmission media can include a network and/or data links that carry required program code in the form of computer-executable instructions or data structures, which can be accessed by a general-purpose or special-purpose computer.

In addition, the network described herein may represent a network or a combination of networks (such as the Internet, a corporate intranet, a virtual private network (VPN), a local area network (LAN), a wireless local area network (WLAN), a cellular network, a wide area network (WAN), a metropolitan area network (MAN), or a combination of two or more such networks) over which one or more computing devices may access the various systems described in this disclosure. Indeed, the networks described herein may include one or multiple networks that use one or more communication platforms or technologies for transmitting data. For example, a network may include the Internet or other data link that enables transporting electronic data between respective client devices and components (e.g., server devices and/or virtual machines thereon) of the cloud computing system.

Further, upon reaching various computer system components, program code means in the form of computer-executable instructions or data structures can be transferred automatically from transmission media to non-transitory computer-readable storage media (devices), or vice versa. For example, computer-executable instructions or data structures received over a network or data link can be buffered in random-access memory (RAM) within a network interface module (NIC), and then it is eventually transferred to computer system RAM and/or to less volatile computer storage media (devices) at a computer system. Thus, it should be understood that computer-readable storage media (devices) can be included in computer system components that also (or even primarily) utilize transmission media.

Computer-executable instructions include instructions and data that, when executed by a processor, cause a general-purpose computer, special-purpose computer, or special-purpose processing device to perform a certain function or group of functions. In some implementations, computer-executable and/or computer-implemented instructions are executed by a general-purpose computer to turn the general-purpose computer into a special-purpose computer implementing elements of the disclosure. The computer-executable instructions may include, for example, binaries, intermediate format instructions such as assembly language, or even source code. Although the subject matter has been described in language specific to structural features and/or methodological acts, it is to be understood that the subject matter defined in the appended claims is not necessarily limited to the features or acts described above. Rather, the described features and acts are disclosed as example forms of implementing the claims.

Those skilled in the art will appreciate that the disclosure may be practiced in network computing environments with many types of computer system configurations, including, personal computers, desktop computers, laptop computers, message processors, hand-held devices, multiprocessor systems, microprocessor-based or programmable consumer electronics, network PCs, minicomputers, mainframe computers, mobile telephones, PDAs, tablets, pagers, routers, switches, and the like. The disclosure may also be practiced in distributed system environments where local and remote computer systems, which are linked (either by hardwired data links, wireless data links, or a combination of hardwired and wireless data links) through a network, both perform tasks. In a distributed system environment, program modules may be located in both local and remote memory storage devices.

The techniques described herein may be implemented in hardware, software, firmware, or any combination thereof unless specifically described as being implemented in a specific manner. Any features described as modules, components or the like may also be implemented together in an integrated logic device or separately as discrete but interoperable logic devices. If implemented in software, the techniques may be realized at least in part by a non-transitory processor-readable storage medium, including instructions that, when executed by at least one processor, perform one or more of the methods described herein (including computer-implemented methods). The instructions may be organized into routines, programs, objects, components, data structures, etc., which may perform particular tasks and/or implement particular data types, and which may be combined or distributed as desired in various implementations.

Computer-readable media can be any available media that can be accessed by a general-purpose or special-purpose computer system. Computer-readable media that store computer-executable instructions are non-transitory computer-readable storage media (devices). Computer-readable media that carry computer-executable instructions are transmission media. Thus, by way of example, implementations of the disclosure can include at least two distinctly different kinds of computer-readable media: non-transitory computer-readable storage media (devices) and transmission media.

As used herein, computer-readable storage media (devices) may include RAM, ROM, EEPROM, CD-ROM, solid-state drives (SSDs) (e.g., based on RAM), Flash memory, phase-change memory (PCM), other types of memory, other optical disk storage, magnetic disk storage or other magnetic storage devices, or any other medium which can be used to store desired program code means in the form of computer-executable instructions or data structures and which can be accessed by a general-purpose or special-purpose computer.

The steps and/or actions of the methods described herein may be interchanged with one another without departing from the scope of the claims. In other words, unless a specific order of steps or actions is required for the proper operation of the method that is being described, the order and/or use of specific steps and/or actions may be modified without departing from the scope of the claims.

The term "determining" encompasses a wide variety of actions and, therefore, "determining" can include calculating, computing, processing, deriving, investigating, looking up (e.g., looking up in a table, a data repository, or another data structure), ascertaining, and the like. Also, "determining" can include receiving (e.g., receiving information), accessing (e.g., accessing data in a memory), and the like. Also, "determining" can include resolving, selecting, choosing, establishing, and the like.

The terms "comprising," "including," and "having" are intended to be inclusive and mean that there may be additional elements other than the listed elements. Additionally, it should be understood that references to "one implementation" or "implementations" of the present disclosure are not intended to be interpreted as excluding the existence of additional implementations that also incorporate the recited features. For example, any element or feature described concerning an implementation herein may be combinable with any element or feature of any other implementation described herein, where compatible.

The present disclosure may be embodied in other specific forms without departing from its characteristics. The described implementations are to be considered illustrative and not restrictive. The scope of the disclosure is indicated by the appended claims rather than by the foregoing description. Changes that come within the meaning and range of equivalency of the claims are to be embraced within their scope.

The disclosure presented herein also encompasses the subject matter set forth in the following examples:
Example 1. A computer-implemented method for generating anomaly groupings for incidents in a computing system using one or more generative artificial intelligence (AI) models, the computer-implemented method comprising: obtaining a set of detected anomalous signals corresponding to a cloud computing system; generating, using multiple different grouping logic models, multiple data graphs that each include groups of related anomalous signals from the set of detected anomalous signals; generating an aggregated data graph by combining the multiple data graphs to form multiple groups of connected anomalous signals; determining a root cause for a first group of the multiple groups of connected anomalous signals based on a first set of anomalous signals in the first group using a generative AI model; and providing the multiple groups of connected anomalous signals within an incident report interface, the incident report interface including the first group and the root cause for the first set of anomalous signals.
Example 2. The computer-implemented method of example 1, further comprising generating detected anomalous signals from metric signals and log data that are outside of corresponding tolerance ranges, wherein the set of detected anomalous signals includes textual data and metadata objects corresponding to the detected anomalous signals.
Example 3. The computer-implemented method of any of examples 1 to 2, wherein: the multiple data graphs generated with the multiple different grouping logic models include different groups of related anomalous signals; and a multiple data graph generated by a grouping logic model includes a subset of anomalous signals from the set of detected anomalous signals.
Example 4. The computer-implemented method of any of examples 1 to 3, wherein a grouping logic model from the multiple different grouping logic models includes: transforming the set of detected anomalous signals into an encoded format to create a set of encoded anomalous signals; and generating one or more groups of related anomalous signals by applying a grouping logic to connect related anomalous signals from the set of encoded anomalous signals.
Example 5. The computer-implemented method of example 4, further comprising: generating a data graph from the one or more groups of related anomalous signals; and determining scores between nodes of the data graph based on connection strength between adjacent nodes.
Example 6. The computer-implemented method of any of examples 1 to 5, wherein a semantic grouping logic model from the multiple different grouping logic models includes: transforming the set of detected anomalous signals into semantic embeddings to create a set of anomalous signal embeddings; generating one or more groups of semantically related anomalous signals by determining groups of anomalous signals from the set of anomalous signal embeddings that are within a threshold distance of each other; and generating a semantic data graph from the groups of anomalous signals.
Example 7. The computer-implemented method of any of examples 1 to 6, wherein a reoccurring pattern grouping logic model from the multiple different grouping logic models includes: comparing the set of detected anomalous signals to reoccurring patterns of prior anomalous signals; determining groups of reoccurring pattern anomalous signals based on identifying matches between the set of detected anomalous signals and the reoccurring patterns; and generating a reoccurring pattern data graph from the groups of reoccurring pattern anomalous signals.
Example 8. The computer-implemented method of example 7, further comprising: generating a reoccurring pattern database that correlates sets of prior anomalous signals with prior service incidents; and generating the reoccurring patterns from the sets of prior anomalous signals based on two or more prior anomalous signals appearing together in one or more prior service incidents above a threshold number of occurrences.
Example 9. The computer-implemented method of any of examples 1 to 8, wherein a transactional pattern grouping logic model from the multiple different grouping logic models includes: comparing actions corresponding to the set of detected anomalous signals to transactional patterns to identify action sequences; determining groups of transactional pattern anomalous signals by combining anomalous signals from the set of detected anomalous signals that correspond to the action sequences; and generating a transactional pattern data graph from the groups of transactional pattern anomalous signals.
Example 10. The computer-implemented method of example 9, further comprising generating a transactional pattern database of the transactional patterns that includes the action sequences having connected actions within the cloud computing system.
Example 11. The computer-implemented method of example 10, further comprising merging the action sequences within the transactional pattern database that share a subset of overlapping action sequences.
Example 12. The computer-implemented method of any of examples 1 to 11, further comprising generating the aggregated data graph by combining nodes and connections from the multiple data graphs, the aggregated data graph forming the multiple groups of connected anomalous signals.
Example 13. The computer-implemented method of example 12, wherein combining the nodes and the connections from the multiple data graphs includes: mapping the nodes and the connections from each of the multiple data graphs into the aggregated data graph using a graph merging model; refining the aggregated data graph by removing connections that do not meet a minimum threshold connection strength value; and creating the multiple groups of connected anomalous signals based on clusters of connected anomalous signals.
Example 14. The computer-implemented method of any of examples 1 to 13, wherein the aggregated data graph shows connections between related nodes, the connections indicating: a connection strength between two adjacent connected nodes; and each of the multiple different grouping logic models that indicated a connection between the two adjacent connected nodes.
Example 15. A system comprising: a processing system having a processor; and a computer memory including instructions that, when executed by the processing system, cause the system to carry out operations comprising: generating, using multiple different grouping logic models, multiple data graphs that each include groups of related anomalous signals from a set of detected anomalous signals, wherein the groups of related anomalous signals from the multiple different grouping logic models differ from each other; generating an aggregated data graph by combining the multiple data graphs to form multiple groups of connected anomalous signals; determining a root cause for a first group of the multiple groups of connected anomalous signals based on a first set of anomalous signals in the first group using a generative AI model; and providing the multiple groups of connected anomalous signals within an incident report interface, the incident report interface including the first group and the root cause for the first set of anomalous signals.
Example 16. The system of example 15, further comprising additional instructions that, when executed by the processing system, cause the system to carry out operations comprising: ranking the multiple groups of connected anomalous signals in the aggregated data graph based on one or more anomalous signal characteristics; and generating a first group name for the first group of the multiple groups of connected anomalous signals by: distilling the first set of anomalous signals in the first group using the generative AI model to create a first group of distilled anomalous signals; and determining the first group name for the first group based on providing the first group of distilled anomalous signals to the generative AI model.
Example 17. The system of example 16, wherein determining the root cause for the first group includes providing the first set of anomalous signals in the first group to the generative AI model with a prompt to return a cloud incident root cause based on the first set of anomalous signals in the first group.
Example 18. The system of example 17, wherein the incident report interface: identifies the first group based on the first group name determined for the first group; and includes a corrective action for resolving the first set of anomalous signals.
Example 19. The system of example 18, further comprising additional instructions that, when executed by the processing system, cause the system to execute the corrective action on a cloud computing system to address the first set of anomalous signals.
Example 20. A computer-implemented method for generating anomaly groupings for incidents in a computing system using one or more generative artificial intelligence (AI) models, the computer-implemented method comprising: generating, using multiple different grouping logic models, multiple data graphs that each include groups of related anomalous signals from a set of detected anomalous signals detected on a cloud computing system; generating an aggregated data graph by combining the multiple data graphs to form multiple groups of connected anomalous signals; determining a root cause for a first group of the multiple groups of connected anomalous signals based on a first set of anomalous signals in the first group using a generative AI model; providing the multiple groups of connected anomalous signals within an incident report interface, the incident report interface including the first group and the root cause for the first set of anomalous signals; and executing a corrective action on a cloud computing system to address or resolve a service incident corresponding to the first set of anomalous signals.

## Claims

1. A computer-implemented method for generating anomaly groupings for incidents in a computing system using one or more generative artificial intelligence 'AI' models, the computer-implemented method comprising:
obtaining a set of detected anomalous signals (112) corresponding to a cloud computing system (110);
generating, using multiple different grouping logic models (114), multiple data graphs (116) that each include groups of related anomalous signals from the set of detected anomalous signals (112);
generating an aggregated data graph (122) by combining the multiple data graphs (116) to form multiple groups of connected anomalous signals (132);
determining a root cause (134) for a first group of the multiple groups of connected anomalous signals (132) based on a first set of anomalous signals in the first group using a generative AI model (130); and
providing the multiple groups of connected anomalous signals (132) within an incident report interface (142), the incident report interface (142) including the first group and the root cause for the first set of anomalous signals.

2. The computer-implemented method of claim 1, further comprising generating detected anomalous signals from metric signals and log data that are outside of corresponding tolerance ranges, wherein the set of detected anomalous signals includes textual data and metadata objects corresponding to the detected anomalous signals.

3. The computer-implemented method of any of claims 1-2, wherein:
the multiple data graphs generated with the multiple different grouping logic models include different groups of related anomalous signals; and
a multiple data graph generated by a grouping logic model includes a subset of anomalous signals from the set of detected anomalous signals.

4. The computer-implemented method of any of claims 1-3, wherein a grouping logic model from the multiple different grouping logic models includes:
transforming the set of detected anomalous signals into an encoded format to create a set of encoded anomalous signals; and
generating one or more groups of related anomalous signals by applying a grouping logic to connect related anomalous signals from the set of encoded anomalous signals.

5. The computer-implemented method of claim 4, further comprising:
generating a data graph from the one or more groups of related anomalous signals; and
determining scores between nodes of the data graph based on connection strength between adjacent nodes.

6. The computer-implemented method of any of claims 1-5, wherein a semantic grouping logic model from the multiple different grouping logic models includes:
transforming the set of detected anomalous signals into semantic embeddings to create a set of anomalous signal embeddings;
generating one or more groups of semantically related anomalous signals by determining groups of anomalous signals from the set of anomalous signal embeddings that are within a threshold distance of each other; and
generating a semantic data graph from the groups of anomalous signals.

7. The computer-implemented method of any of claims 1-6, wherein a reoccurring pattern grouping logic model from the multiple different grouping logic models includes:
comparing the set of detected anomalous signals to reoccurring patterns of prior anomalous signals;
determining groups of reoccurring pattern anomalous signals based on identifying matches between the set of detected anomalous signals and the reoccurring patterns; and
generating a reoccurring pattern data graph from the groups of reoccurring pattern anomalous signals.

8. The computer-implemented method of claim 7, further comprising:
generating a reoccurring pattern database that correlates sets of prior anomalous signals with prior service incidents; and
generating the reoccurring patterns from the sets of prior anomalous signals based on two or more prior anomalous signals appearing together in one or more prior service incidents above a threshold number of occurrences.

9. The computer-implemented method of any of claims 1-8, wherein a transactional pattern grouping logic model from the multiple different grouping logic models includes:
comparing actions corresponding to the set of detected anomalous signals to transactional patterns to identify action sequences;
determining groups of transactional pattern anomalous signals by combining anomalous signals from the set of detected anomalous signals that correspond to the action sequences; and
generating a transactional pattern data graph from the groups of transactional pattern anomalous signals.

10. The computer-implemented method of claim 9, further comprising generating a transactional pattern database of the transactional patterns that includes the action sequences having connected actions within the cloud computing system.

11. The computer-implemented method of claim 10, further comprising merging the action sequences within the transactional pattern database that share a subset of overlapping action sequences.

12. The computer-implemented method of any of claims 1-11, further comprising generating the aggregated data graph by combining nodes and connections from the multiple data graphs, the aggregated data graph forming the multiple groups of connected anomalous signals.

13. The computer-implemented method of claim 12, wherein combining the nodes and the connections from the multiple data graphs includes:
mapping the nodes and the connections from each of the multiple data graphs into the aggregated data graph using a graph merging model;
refining the aggregated data graph by removing connections that do not meet a minimum threshold connection strength value; and
creating the multiple groups of connected anomalous signals based on clusters of connected anomalous signals.

14. The computer-implemented method of any of claims 1-13, wherein the aggregated data graph shows connections between related nodes, the connections indicating:
a connection strength between two adjacent connected nodes; and
each of the multiple different grouping logic models that indicated a connection between the two adjacent connected nodes.

15. A system comprising:
a processing system having a processor (1101); and
a computer memory (1103) including instructions (1105) that, when executed by the processing system, cause the system to carry out operations comprising:
generating, using multiple different grouping logic models (114), multiple data graphs (116) that each include groups of related anomalous signals from a set of detected anomalous signals (112), wherein the groups of related anomalous signals from the multiple different grouping logic models (114) differ from each other;
generating an aggregated data graph (122) by combining the multiple data graphs (116) to form multiple groups of connected anomalous signals (132);
determining a root cause for a first group of the multiple groups of connected anomalous signals (132) based on a first set of anomalous signals in the first group using a generative AI model (130); and
providing the multiple groups of connected anomalous signals (132) within an incident report interface (142), the incident report interface (142) including the first group and the root cause for the first set of anomalous signals.
